# EUROPEAN PATENT APPLICATION

(11) **EP 1 717 205 A1**
(43) Date of publication of application: **02.11.2006**
(21) Application number: 05710363.2
(22) Date of filing: 10.02.2005
(51) Int. Cl.: C02F 1/50, B63B 13/00, C02F 1/28, C02F 1/34, C02F 1/38, C02F 1/46, C02F 1/70, C02F 1/76, C02F 9/00

(54) **METHOD OF LIQUID DETOXIFICATION AND APPARATUS THEREFOR**

(30) Priority: 13.02.2004 JP 2004037273; 30.04.2004 JP 2004135389; 08.06.2004 JP 2004170514
(71) Applicant: MITSUBISHI HEAVY INDUSTRIES, LTD., Tokyo 108-8215 (JP)
(72) Inventor: NISHIZAWA, Kazuki, YOKOHAMA Research&Develop. Ctr., Kanazawa, Yokohama-shi Kanagawa 2368515 (JP); FUJISE, Kazuhiko, YOKOHAMA Research &Develop. Ctr., Kanazawa, Yokohama-shi Kanagawa 2368515 (JP); TABATA, Masayuki YOKOHAMA Research & Develop. Ctr., Kanazawa, Yokohama-shi Kanagawa 2368515 (JP); SUGATA, Kiyoshi, YOKOHAMA Research & Develop. Ctr., Kanazawa, Yokohama-shi Kanagawa 2368515 (JP); UEDA, Ryouhei, YOKOHAMA Research & Develop. Ctr., Kanazawa, Yokohama-shi Kanagawa 2368515 (JP); UEDA, Takashi, YOKOHAMA Research & Develop. Ctr., Kanazawa, Yokohama-shi Kanagawa 2368515 (JP); OKADA, Hirokazu, YOKOHAMA Dockyard&Machinery Works, Naka-ku, Yokohama-shi, Kanagawa 2318715 (JP); OOMURA, Tomoaki, YOKOHAMA Research & Develop. Ctr., Kanazawa, Yokohama-shi Kanagawa 2368515 (JP)
(74) Representative: Bongiovanni, Simone
(86) International application number: PCT/JP2005/002515
(87) International publication number: WO 2005/077833

(57) **Abstract**

Conversion of an untreated liquid to a clean harmless treated liquid through microbe removal, **characterized in that** a mechanical treatment for damaging microbes present in a liquid to thereby effect extinction thereof and sterilization, combined with a chlorination in which a chlorine-containing substance is formed from a liquid and injected into a liquid to thereby effect microbe extinction and sterilization, is applied to a liquid. There is further provided an electrolytic circulation system comprising applying a detoxification treatment for extinction of microbes in seawater and sterilization by means of detoxification facilities on land or on the sea to seawater introduced through a seawater introduction channel and accommodating the seawater having been thus treated in a ballast water tank. As a result, facility and operating costs can be reduced. Extinction of microbes of unlimited size and sterilization can be securely achieved without any strength drop on the side of treated liquid accommodation body. Further, the space for installation of detoxification apparatus for ballast water in ships can be reduced to thereby enable increasing of loading space for cargo, etc. Still further, on existing ships, the hull rework cost for installation of detoxification apparatus can be minimized.

## Description

### FIELD OF THE INVENTION

The present invention relates to a method of liquid detoxification and an apparatus for converting untreated liquid to a clean harmless treated liquid through microbe removal by applying a mechanical treatment combined with chlorination to untreated liquid. The treatment is applied for treating untreated seawater through microbe removal and then storing clean treated seawater in a ballast water tank, for converting untreated seawater stored in the ballast tank to clean treated seawater out at sea, or for converting untreated seawater stored in the ballast water tank and then draining the clean treated seawater.

### RELATED ART

When a ship such as a tanker carries no oil, seawater stored in a ballast water tank, i.e. ballast water is converted to clean treated seawater through microbe removal out at sea in order to avoid marine contamination and environmental pollution.

Such a method of the detoxification is disclosed in JP2794537B, JP2002-192161A and JP2003-200156A.

JP2794537B teaches to kill the planktons in the precipitation remaining in a ballast tank by maintaining the temperature higher than the thermal death point of harmful planktons and bacteria for a predetermined time.

In JP2002-192161A, a high voltage pulse is applied to ballast water in a ballast tank. The harmful organism are damaged and defused by directly applying high voltage to them and therefore causing electric discharge in them, or they are damaged and defused indirectly by the energy of shock waves that are produced by arc discharge produced when the high-voltage pulse is applied across the electrodes.

JP2003-200156A shows a technique for damaging and killing microbes in untreated liquid by running the untreated liquid in a pipe through a slit plate having a number of elongated slit-like openings in a cross-sectional direction.

The method of JP2794537B involves the risk of damaging the ship due to the stress concentrated on a certain part of the ship as the treatment is applied in an empty ballast water tank or in a ballast tank with some water remaining on the bottom. The ballast water tank is heated in a wide area in order to raise the temperature of the precipitation remaining in the tank. This heating process requires more time and labor, and is costing.

JP2002-192161A requires a large-scale apparatus to apply high-voltage pulse. Thus the plant cost and running cost becomes expensive.

The shearing treatment disclosed in JP2003-200156A damages and kills microbes of large size by running untreated liquid through the slit plate but it is very difficult to damage and kill small-size microbes.

Liquid detoxification apparatuses of JP2794537 and JP2002-192161A are provided on the ship, which takes up a lot of space on the ship for installing the apparatus and reduces the space for loading cargo.

Also, with the technique of JP2794537B and JP2002-192161A, it requires a major modification inside the ship in order to place the apparatus on existing ships and it becomes very costing.

Therefore, in view of the problems of the related art, the first object of the present invention is to provide a method of liquid detoxification and its apparatus that is capable of killing microbes-of unlimited size, achieving a reduction in facility and operation costs without any strength drop on the side of treated liquid accommodation body.

The second object of the present invention is to provide a seawater detoxification apparatus that kills microbes of unlimited size, reducing facility and operation costs without any strength drop of the ship and further reduces its installation space, thereby increasing loading space for cargo, etc. Still further, on existing ships, the hull rework cost for installation of detoxification apparatus can be minimized.

### SUMMARY OF THE INVENTION

An object of the present invention is to provide a liquid detoxification method for purifying liquid by removing microbes in untreated liquid, comprising steps for: applying a mechanical treatment to the liquid for damaging microbes therein to thereby kill microbes; applying either one of chlorination or oxidization, the chlorination being performed by producing chlorine-containing substance from the liquid and injecting the substance into the liquid to thereby kill microbes, and the oxidization being performed by adding oxidizing substance to the liquid; and storing treated liquid into a tank for treated liquid.

It is preferable that the chlorination is performed in a electrolytic circulation system in which all or part of the liquid is introduced into a storing tank and circulated through a circulation line between the storing tank and an electrolyzer for electrolyzing the liquid thereby to obtain chlorine-containing substance.

The present invention also provides in order to implement the above method, a detoxification apparatus for purifying liquid by removing microbes in untreated liquid containing untreated seawater, the apparatus comprising: a mechanical treatment unit for applying a mechanical treatment to the liquid by damaging microbes in the liquid to thereby kill microbes; either one of oxidization means or chlorination means, the oxidization means adding oxidizing substance to the liquid and the chlorination means feeding chlorine-containing substance formed from the liquid to the liquid thereby to kill microbes; and a tank for treated liquid for storing the treated liquid after being treated in the mechanical treatment unit and the oxidization means or chlorination means.

The detoxification apparatus is preferably composed such that the chlorination means has a liquid electrolytic unit being configured to apply chlorination being performed in an electrolytic circulation system in which all or part of the liquid is introduced into a storing tank and circulated through a circulation line between the storing tank and an electrolyzer for electrolyzing the liquid thereby to obtain chlorine-containing substance.
In the invention, the microbes are mainly those that are toxic or pathogenic or those that disturb ecosystems, such as zooplankton and its cyst, phytoplankton and its cyst, bacteria, fungi and virus. And the above-described detoxification is to kill the microbes that cause seawater pollution or damage to human beings and creatures in the sea or those that disturb ecosystems.

The sodium hypochlorite is most suitable as aforesaid chlorine-containing substance. However, chlorine, sodium, chloric acid, ion thereof or sodium chloride can be used.

The substance possessing oxidizing properties also include oxidants such as hydrogen peroxide and ozone, besides the chlorine-containing substance.

Meanwhile, the chlorine-containing substance can be added externally as chemicals.

According to the invention, extinction of microbes of unlimited size can be securely achieved in one system in which the mechanical treat for killing comparatively large microbes, combined with the chlorination for killing smaller size microbes such as bacteria is applied to liquid. The mechanical treatment is to damage and kill microbes of unlimited size including comparatively large microbes such as crustacean ones preferably by passing the liquid through a perforated slit plate with a number of small openings whose inner diameter is approximately 0.5mm. The liquid which is mechanically treated can be either chlorinated by adding chlorine containing substance composed by chlorine, sodium hypochlorite, sodium, chloric acid, or ion thereof or sodium chloride, or oxidized by oxidizing substance.

By combining the mechanical treatment and the chlorination, extinction of microbes of unlimited size is securely achieved. And by combining the mechanical treatment with the chlorination or the oxidization, workload of the mechanical treatment is lightened and its pressure drop is reduced and less power is required to operate the mechanical treatment unit, thereby downsizing the unit with the smaller capacity. Further, the input of the chlorine-containing substance is reduced in the chlorination for killing bacteria to which the chlorination is very effective.

With this structure, can be provided a liquid detoxification system in which microbes present in the liquid can be securely removed and its installation and operation costs are reduced.

Also, when sodium hypochlorite is used as the chlorine-containing substance, with the combination of the mechanical treatment for killing comparatively large microbes, the sodium hypochlorite is needed only for removing bacteria, thereby reducing its input for purifying the liquid compared to the method in which sodium hypochlorite is used for removing both microbes and bacteria.

Accordingly, the residual sodium hypochlorite decreases drastically, preventing the corrosion of succedent units by the sodium hypochlorite during the detoxification, thereby improving the durability of the succedent units and suppressing marine contamination.

In the invention, an electrolytic circulation system using the liquid electrolytic unit is preferably performed as described below.
- The treatment by the system is performed before or after the mechanical treatment.
- The liquid treated in the system is taken out somewhere along the circulation line and introduced to the liquid before or after the mechanical treatment.

With this structure, the chlorine-containing substance contained in the liquid circulating in the circulation line, especially sodium hypochlorite, is introduced into an electrolytic bath, thereby lowering the pH level of the liquid which is supplied to the bath and preventing scale adhesion.

According to the present invention, it is preferable to apply at least one of an active-carbon treatment using active carbons and a metal-catalytic treatment to the liquid after the mechanical treatment and chlorination.

Thus, carcinogens which tend to take place in the treated liquid after chlorination can be removed by using active carbon for removing trihalomethane.

The aforesaid metal catalyst is preferably metal or chemical compound containing more than one kind from elements of group VIIA such as Mn, Tc and Re, or from elements of group VIII such as Fe, Co, Ni, Ru, Rh, Pd, Os, Ir and Pt.

By applying the metal-catalytic treatment, the HClO remaining after the chlorination is deoxidized by the metal catalyst as shown in the following reaction formula, thereby achieving the liquid detoxification after chlorination.

By applying the active-carbon treatment and metal-catalytic treatment to the chlorinated or mechanically treated liquid, carcinogens which tend to take place in the treated liquid after chlorination can be removed by the active-carbon treatment and remaining HClO can be deoxidized to be harmless by the metal-catalytic treatment, thereby improving the liquid detoxification and purification.

The present invention is unique in that a liquid detoxification method for purifying liquid by removing microbes in untreated liquid comprises steps for:
applying a microbe-separation treatment by filtration or centrifugal separation for removing comparatively large microbes present in the liquid, the filtration being performed by running the liquid through a filter or the like;
applying either one of chlorination or oxidization, the chlorination being performed by producing chlorine-containing substance from the liquid and feeding the chlorine-containing substance into the liquid to thereby kill microbes, and the oxidization being performed by adding oxidizing substance to the liquid; and
storing treated liquid into a tank for treated liquid.

Further, the present invention is unique in that a detoxification method for purifying untreated seawater by removing microbes in untreated seawater comprises steps for:
applying a microbe-separation treatment by filtration or centrifugal separation for removing comparatively large microbes present in the seawater, the filtration being performed by running the seawater through a filter or the like;
applying either one of chlorination or oxidization, the chlorination being performed by producing chlorine-containing substance from the seawater and adding the substance into the seawater to thereby kill microbes, and the oxidization being performed by adding oxidizing substance to the seawater; and
storing treated seawater into a ballast water tank.

The present invention also provides in order to implement the above method, a detoxification apparatus for purifying liquid by removing microbes in untreated liquid containing untreated seawater, the apparatus comprising:
a microbe-separation unit by filtration or centrifugal separation for removing comparatively large microbes present in the liquid, the filtration being performed by running the liquid through a filter or the like;
either one of chlorination means or oxidization means, the chlorination means producing chlorine-containing substance from the liquid and feeding the substance into the liquid to thereby kill microbes, and the oxidization means adding oxidizing substance to the liquid; and
a tank for storing treated liquid.

According to the present invention, the efficiency for treating microbes improves with the combination of the microbe separation treatment by filtration or centrifugal separation and the oxidization by adding oxidizing substance into the liquid after the microbe-separation treatment. Also, by selecting an optimal mesh for the filter for removing microbes, comparatively large microbes can be securely captured and the captured microbes can be easily removed by the backwash.

It is also preferable to further comprise a step for applying a mechanical-treatment by a mechanical-treatment unit to the liquid for damaging microbes therein thereby to kill microbes before or after applying the microbe-separation treatment.

With the structure, with the combination of the microbe separation treatment by filtration or centrifugal separation and other mechanical treatments, the efficiency for treating microbes improves, thereby reducing the stress from the chlorination. The present invention also teaches a detoxification method for purifying seawater by removing microbes in untreated seawater, the method comprising steps for:
applying a mechanical treatment to the seawater for damaging microbes therein to thereby kill microbes,
applying either one of chlorination or oxidization, the chlorination being performed by producing chlorine-containing substance from the seawater and injecting the substance into the seawater to thereby kill microbes, and the oxidization being performed by adding oxidizing substance to the seawater; and
storing treated seawater into a tank for treated seawater. The substance possessing oxidizing properties also include oxidants such as hydrogen peroxide and ozone, besides the chlorine-containing substance.

It is preferable that the chlorination is performed in an electrolytic circulation system in which all or part of seawater is introduced into a storing tank and circulated through a circulation line between the storing tank and an electrolyzer for electrolyzing the seawater thereby to obtain chlorine-containing substance.

It is also preferable that the chlorination is applied to all or part of the mechanically treated seawater to be stored in the ballast water tank and the chlorine-containing substance produced by the chlorination is introduced to the seawater before or after the mechanical treatment.

According to the present invention, the extinction of microbes of unlimited size in the seawater can be securely achieved by applying the mechanical treatment for killing comparatively large microbes in the turbulent flow caused when the seawater passes through a perforated slit plate with a number of small openings, combined with the oxidization or the chlorination for killing bacteria and the like by adding the chlorine-containing substance in the seawater. Thus a pressure drop of the mechanical treatment unit is abated and its pressure is reduced.

With this structure, a less power is required to operate the mechanical treatment unit for purifying the seawater, thereby downsizing the unit with the smaller capacity. Moreover, in oxidization or the chlorination, the input of hydrogen peroxide or ozone, or chlorine-containing substance such as sodium hypochlorite, chlorine, sodium, chloric acid.

Further, the present invention provides a detoxification system which is capable of extinction of microbes present in the seawater, achieving a reduction in facility and operation costs. Also, in the case that sodium hypochlorite is used as the chlorine-containing substance for the chlorination, with the combination the mechanical treatment for killing comparatively large microbes and the chlorination, the sodium hypochlorite is needed only for removing bacteria, thereby reducing the input of the sodium hypochlorite for purifying the seawater compared to the method in which sodium hypochlorite is used for removing both microbes and bacteria.

Accordingly, the residual sodium hypochlorite decreases drastically, preventing the corrosion of succedent units by the sodium hypochlorite during the detoxification, thereby improving the durability of the succedent units and suppressing marine contamination caused when discharging the sodium hypochlorite to sea.

In the invention, an electrolytic circulation system is preferably performed as described below.
- The treatment by the system is performed before or after the mechanical treatment.
- The liquid treated in the system is taken out somewhere along the circulation line and introduced to the seawater before or after the mechanical treatment.

With this structure, the chlorine-containing substance especially sodium hypochlorite contained in the seawater circulating in the circulation line between a storage tank for storing the treated seawater and the electrolytic bath, is introduced into the electrolytic bath, thereby lowering the pH level of the seawater which is supplied to the bath and preventing scale adhesion. It is also preferable that natural energy such as solar battery and a wind power is used as an electric source for the chlorination of seawater.

Thus, the natural energy being used as electric source for the chlorination, the cost for the chlorination can be reduced and the detoxification of ballast water can be achieved with the minimum engine power of the ship even when the ship is out to sea.

The present invention also teaches a detoxification method for purifying seawater by removing microbes in seawater stored in a ballast water tank, comprising steps for:
applying a mechanical treatment to the seawater for damaging microbes therein to thereby kill microbes,
applying either one of chlorination or oxidization, the chlorination being performed by producing chlorine-containing substance from the seawater and feeding the substance into the seawater to thereby kill microbes, and the oxidization being performed by adding oxidizing substance to the liquid; and
discharging treated seawater out of the ballast water tank. According to method, by applying the combination of the mechanical treatment and the chlorination or oxidization before discharge the seawater out of the tank for loading cargos, it becomes possible to discharge completely detoxified seawater out of the tank.

The present invention further teaches a detoxification method for purifying seawater by removing microbes in seawater stored in a ballast water tank, comprising steps for:
applying a mechanical treatment to the seawater for damaging microbes therein to thereby kill microbes,
applying either one of chlorination or oxidization, the chlorination being performed by producing chlorine-containing substance from the seawater and feeding the substance into the seawater to thereby kill microbes, and the oxidization being performed by adding oxidizing substance to the liquid; and
circulating the seawater to the ballast water tank.

With the combination of the mechanical treatment and the chlorination or oxidization, it becomes possible to detoxified ballast water even when the ship is underway, reducing the detoxification time when the ballast water is discharged from the ship.

It is also preferable that a residual chlorine meter for measuring the level of residual chlorine in treated seawater is provided and the chlorination means control the amount of the chlorine-containing substance to be produced based on the residual chlorine level measured by the residual-chlorine meter.

With the structure, the electrolytic current can be controlled based on the measured residual chlorine level, thereby precisely controlling the feeding amount of chlorine-containing substance such as the sodium hypochlorite to meet a target value, and the treatment cost using the sodium hypochlorite is minimized.

According to the invention, with the combination of the mechanical treatment for killing comparatively large microbes and the chlorination or oxidization for killing smaller size ones such as bacteria, extinction of microbes of unlimited size can be securely achieved.

Further with the combination of the mechanical treatment and the chlorination or the oxidization, workload of the mechanical treatment is lightened and its pressure drop is reduced and less power is required to operate the mechanical treatment unit, thereby downsizing the unit with the smaller capacity. Further, the input of the chlorine-containing substance such as sodium hypochlorite, chlorine, sodium and chloric acid is reduced in the chlorination for killing bacteria to which the chlorination is very effective. Thus, the present invention provides a detoxification system which is capable of extinction of microbes present in the seawater, achieving a reduction in facility and operation costs.

According to the invention, by applying the combination of the mechanical treatment and the chlorination or oxidization to seawater stored in the ballast water tank for removing microbes present in the seawater, it becomes possible to discharge completely detoxified seawater to the sea.

By circulating the seawater stored in the ballast water tank for applying the mechanical treatment and the chlorination or oxidization, it becomes possible to detoxificate ballast water even when the ship is underway, reducing the detoxification time when the ballast water is discharged from the ship.

Also, in the case that sodium hypochlorite is used as the chlorine-containing substance for the chlorination, with the combination the chlorination and the mechanical treatment for killing comparatively large microbes, the sodium hypochlorite is needed only for removing bacteria, thereby reducing the input of the sodium hypochlorite for purifying the seawater compared to the method in which sodium hypochlorite is used for removing both microbes and bacteria.

Accordingly, the residual sodium hypochlorite decreases drastically, preventing the corrosion of succedent units by the sodium hypochlorite during the detoxification, thereby improving the durability of the succedent units and suppressing marine contamination caused when discharging the sodium hypochlorite to sea.

The present invention provides a detoxification apparatus for purifying seawater by removing microbes present in seawater, comprising:
an on-land detoxification facility being placed on land for killing microbes in the seawater;
a ballast water tank being mounted on a ship;
a seawater intake line for taking in seawater into the on-land detoxification facility; and
a seawater discharge line for feeding the seawater treated in the on-land detoxification facility to the ballast water tank;
wherein a microbe-extinction treatment for killing microbes is applied to the seawater introduced into the on-land detoxification facility via the intake line, and the treated seawater is stored into the ballast water tank via the discharge line.

It is preferable in the present invention that the on-land detoxification facility is either one of chlorination means or oxidization means when an on-board detoxification facility mounted on the ship is a mechanical treatment unit, or the on-land detoxification is the mechanical treatment unit when the on-board detoxification facility is either one of chlorination means or oxidization means, the chlorination means producing chlorine-containing substance from the seawater and feeding the substance into the seawater to thereby kill microbes, the oxidization means adding oxidizing substance to the seawater, and the mechanical treatment unit applying a mechanical treatment to the seawater by damaging microbes therein to thereby kill microbes,
wherein the seawater treated in the on-land detoxification facility is fed to the on-board detoxification facility via the seawater discharge line, and the seawater treated in the on-board detoxification facility is stored in the ballast water tank.

It is also preferable in the present invention that the on-land detoxification facility comprises:
either one of chlorination means or oxidization means, the chlorination means producing chlorine-containing substance from the seawater and feeding the substance into the seawater to thereby kill microbes, and the oxidization means adding oxidizing substance to the seawater; and
a microbe-separation unit by filtration or centrifugal separation for removing comparatively large microbes present in the seawater, the filtration being performed by running the seawater through a filter or the like; and
wherein the seawater treated in the chlorination means or oxidization means and the microbe-separation unit is stored into the ballast water tank via the discharge line.

According to the present invention, the on-land detoxification facility is either one of the chlorination means or oxidization means, or the mechanical treatment unit or the microbe separation unit. Untreated seawater is treated by the on-land detoxification facility for killing microbes in the seawater. The treated seawater is stored in the ballast water tank via the seawater discharge line which connects the on-land detoxification facility to the ballast water tank in the ship. Therefore it becomes unnecessary to install detoxification facilities on the ship such as the chlorination means, oxidization means, mechanical treatment unit and the microbe separation unit. Also, the installation space on the ship for the detoxification apparatus is reduced, thereby increasing the loading space for cargo, etc.

Also, as the seawater discharge line connecting the ballast water tank on the ship and the on-land detoxification facility constituted by one of the chlorination means or the oxidization means, or the mechanical treatment unit or microbe separation unit, can be disconnected and connected to each of the ships, one (one set of) on-land detoxification facility can be used for the liquid detoxification of more than one ship, thereby raising the operation rate of the on-land detoxification facility, reducing the number of units mounted on each ship for detoxification, and also lowering installation cost.

Further, in case that the detoxification apparatus constituted by one of the chlorination means or the oxidization means, or the mechanical treatment unit or microbe separation unit is located on-land, it is not necessary to install a new detoxification apparatus on existing ships and the hull rework cost is minimized, thereby minimizing the cost for installing the detoxification apparatus on the ship.

A preferable configuration of the present invention is detailed in the following;
€• The on-land detoxification unit is either one of the chlorination means or the oxidization means and the mechanical treatment unit and/or the microbe separation unit. The chlorination means produces chlorine-containing substance from said liquid and feeding the substance to the seawater to thereby kill microbes. The oxidization means feed oxidizing substance to the seawater. The mechanical treatment applies a mechanical treatment for damaging and killing microbes present in the seawater, and the microbe-separation unit removes comparatively large microbes present in the seawater by centrifugal separation or filtration by allowing seawater to pass through a filter or the like. With this structure, the seawater treated in the on-land detoxification facility can be stored in the ballast water tank via the seawater discharge line which connects the on-land detoxification facility and the ballast water tank.

•• The on-land detoxification unit is either one of the chlorination means or the oxidization means. The on-board detoxification facility is one or both of the mechanical treatment unit and the microbe separation unit. With this structure, the seawater treated by the on-land detoxification facility is fed to the on-board detoxification facility and the treated seawater is stored in the ballast water tank.
•• The seawater intake line is provided on the ship which has an inlet open to the sea and is connected to the mechanical treatment unit or the microbe-separation unit. With this structure, the seawater treated by the on-land detoxification facility which is the chlorination means or oxidization means, and the seawater introduced through the seawater intake line provided on the ship can be detoxified simultaneously by the on-board detoxification facility to be stored in the ballast water tank, detoxified simultaneously, thereby purifying large amount of seawater by the mechanical treatment unit of a simple structure.

In the invention, the microbes are mainly those that are toxic or pathogenic or those that disturb ecosystems, such as zooplankton and its cyst, phytoplankton and its cyst, bacteria, fungi and virus. And the above-described detoxification is to kill the microbes that cause seawater pollution or damage to human beings and creatures in the sea or those that disturb ecosystems.

The sodium hypochlorite is most suitable as aforesaid chlorine-containing substance. However, chlorine, sodium, chloric acid, ion thereof or sodium chloride can be used.
The substance possessing oxidizing properties also include oxidants such as hydrogen peroxide and ozone, besides the chlorine-containing substance.

Meanwhile, the chlorine-containing substance can be added externally as chemicals.

In the invention, the mechanical treatment unit is preferably a perforated slit plate facing the liquid flow with a number of small openings whose inner diameter is approximately 0.5mm. The mechanical treatment unit damages and kills microbes of unlimited size including comparatively large microbes such as crustacean ones by running the liquid through the small openings.

Further, smaller size microbes such as bacteria are killed by the chlorination means which feeds to the seawater chlorine-containing substance composed by chlorine, sodium hypochlorite, sodium, chloric acid, or ion thereof or sodium chloride, and/or by the oxidization means which feeds to the seawater oxidizing substance.

Accordingly by combining in a system the mechanical treatment unit or the microbe-separation unit for killing large microbes and the chlorination means or the oxidization means for killing small microbes such as bacteria, extinction of microbes of unlimited size is securely achieved.

And by combining the mechanical treatment unit or the microbe separation unit with the chlorination means or the oxidization means, workload of the mechanical treatment is lightened and its pressure drop is reduced and less power is required to operate the mechanical treatment unit, thereby downsizing the unit with the smaller capacity. Further, the input of chlorine-containing substance for the chlorination such as sodium hypochlorite, chlorine, sodium and chloric acid is reduced as the chlorination needs to be performed only to kill bacteria which the chlorination is very effective to. With this structure, can be provided a liquid detoxification system in which microbes present in the liquid can be securely removed and its installation and operation costs are reduced.

Also, when sodium hypochlorite is used as the chlorine-containing substance, with the combination of the mechanical treatment for killing comparatively large microbes, the sodium hypochlorite is needed only for removing bacteria, thereby reducing its input for purifying the liquid compared to the method in which sodium hypochlorite is used for removing both microbes and bacteria.

Accordingly, the residual sodium hypochlorite decreases drastically, preventing the corrosion of succedent units by the sodium hypochlorite during the detoxification, thereby improving the durability of the succedent units and suppressing marine contamination.

Also, the on-land detoxification unit of the present invention is preferably mounted on a carrier such as a vehicle which moves freely on land.

According to present invention, as the on-land detoxification facility mounted on the carrier is moved close to the ship freely and the seawater detoxified by the on-land detoxification facility can be stored in the ballast water tank in the ship, the length of seawater feeding lines such as the seawater discharge line can be minimized, thereby reducing the power for operating a feeding pump (not shown) and reducing the operating cost for detoxifying the seawater.

Also, when storing the detoxified seawater in the ballast water tank of more than one ship, the on-land detoxification facility mounted on the carrier can be moved freely to each of the ships, thereby achieving the fast and efficient detoxification of ballast water.

The present invention also provides a detoxification apparatus for purifying seawater comprising:
an at-sea detoxification facility being placed on the sea for killing microbes in the seawater;
a ballast water tank being mounted on a ship;
a seawater intake line for taking in seawater into the at-sea detoxification facility; and
a seawater discharge line for feeding the seawater treated in the at-sea detoxification facility to the ballast water tank;
wherein a microbe-extinction treatment for killing microbes is applied to the seawater introduced into the at-sea detoxification facility via the intake line, and the treated seawater is stored into the ballast water tank via the discharge line.

The detoxification apparatus of the invention is configured that the at-sea detoxification facility comprises:
either one of chlorination means or oxidization means, the chlorination means producing chlorine-containing substance from the seawater and feeding the substance into the seawater to thereby kill microbes, and the oxidization means adding oxidizing substance to the seawater; and
a microbe-separation unit by filtration or centrifugal separation for removing comparatively large microbes present in the seawater, the filtration being performed by running the seawater through a filter or the like; and
wherein the seawater treated in the chlorination means or oxidization means and the microbe-separation unit is stored into the ballast water tank via the discharge line.

The detoxification apparatus of the present invention is also configured that the at-sea detoxification facility is either one of chlorination means or oxidization means when an on-board detoxification facility mounted on the ship is a microbe-separation unit, or the on-land detoxification is the microbe-separation unit when the on-board detoxification facility is either one of chlorination means or oxidization means, the chlorination means producing chlorine-containing substance from the seawater and feeding the substance into the seawater to thereby kill microbes, the oxidization means adding oxidizing substance to the seawater, and the microbe-separation unit removing comparatively large microbes present in the seawater by centrifugal separation or filtration which is performed by running the seawater through a filter or the like, and
wherein the seawater treated in the at-sea detoxification facility is fed to the on-board detoxification facility via the seawater discharge line, and the seawater treated in the on-board detoxification facility is stored in the ballast water tank. According to the present invention, the at-sea detoxification facility is either one of the chlorination means or oxidization means, or the mechanical treatment unit or the microbe separation unit.

Untreated seawater is treated by the at-sea detoxification facility for killing microbes in the seawater. The treated seawater is stored in the ballast water tank via the seawater discharge line which connects the at-sea detoxification facility to the ballast water tank in the ship. Therefore detoxification facilities such as the chlorination means, oxidization means, mechanical treatment unit and the microbe separation unit can be provided at the sea and need not be mounted on the ship. Also, the installation space on the ship for the detoxification apparatus is reduced, thereby increasing the loading space for cargo, etc.

Also, as the seawater discharge line connecting the ballast water tank on the ship and the at-sea detoxification facility constituted by one of the chlorination means or the oxidization means, or the mechanical treatment unit or microbe separation unit, can be disconnected and connected to each of the ships, one (one set of) at-sea detoxification facility can be used for the liquid detoxification of more than one ship, thereby raising the operation rate of the at-sea detoxification facility, reducing the number of units mounted on each ship for detoxification, and also lowering installation cost.

Further, in the case of detoxification the seawater for the ship anchoring at sea, the seawater detoxified by the at-sea detoxification facility is fed to the ballast water tank inside the ship by moving the facility mounting boat provided movable freely on the sea and having the facility thereon, thereby achieving the fast and efficient detoxification of ballast water.

Furthermore, the detoxification units such as one of the chlorination means and the oxidization means, or the seawater electrolytic unit or mechanical treatment unit, is provided on the sea as the at-sea detoxification facility, thereby minimizing the hull rework cost of the ship and minimizing the cost for installing a new detoxification apparatus on the ship.
€• The at-sea detoxification unit is either one of the chlorination means or the oxidization means and the mechanical treatment unit and/or the microbe separation unit. The chlorination means produces chlorine-containing substance from said liquid and feeding the substance to the seawater to thereby kill microbes. The oxidization means feed oxidizing substance to the seawater. The mechanical treatment applies a mechanical treatment for damaging and killing microbes present in the seawater, and the microbe-separation unit removes comparatively large microbes present in the seawater by centrifugal separation or filtration which is performed by running the seawater through a filter or the like. With this structure, the seawater treated in the at-sea detoxification facility can be stored in the ballast water tank via the seawater discharge line which connects the at-sea detoxification facility to the ballast water tank.

•• The at-sea detoxification facility is either one of the chlorination means or the oxidization means and the mechanical treatment unit and/or the microbe separation unit. The on-board detoxification facility is mechanical treatment unit and/or the microbe separation unit. With this structure, the seawater treated by the at-sea detoxification facility is fed to the on-board detoxification facility via the seawater discharge line and the treated seawater is stored in the ballast water tank.
•• The seawater intake line is provided on the ship which has an inlet open to the sea and is connected to the mechanical treatment unit or the microbe-separation unit. With this structure, the on-board detoxification facility which is the mechanical treatment or microbe separation unit, detoxified simultaneously both the seawater treated in the at-sea detoxification facility which is the chlorination means or oxidization means, and the seawater fed from the inlet of the seawater intake line provided on the ship and stores the detoxified seawater in the ballast water tank, thereby purifying large amount of seawater by the mechanical treatment unit of a simple structure.

In the present invention as described above, the chlorination means is an electrolytic unit being configured to apply chlorination to seawater. The chlorination is performed in an electrolytic circulation system in which all or part of the seawater is introduced into a storing tank and circulated through a circulation line between the storing tank and an electrolyzer for electrolyzing the seawater thereby to obtain chlorine-containing substance. In the invention, the electrolytic circulation system using the electrolytic unit is preferably performed as described below.
- The treatment by the system is performed before or after the mechanical treatment.
- The liquid treated in the system is taken out somewhere along the circulation line and introduced to liquid before or after the mechanical treatment.

With this structure, the chlorine-containing substance contained in the liquid circulating in the circulation line, especially sodium hypochlorite, is introduced into an electrolytic bath, thereby lowering the pH level of the liquid which is supplied to the bath and preventing scale adhesion.

According to the present invention, the on-land detoxification facility is either one of the chlorination means or oxidization means or the mechanical treatment unit and is provided on land. Untreated seawater is treated by the on-land detoxification facility and the seawater treated in the on-land detoxification facility is stored in the ballast water tank via the seawater discharge line. Therefore detoxification facilities such as the chlorination means, oxidization means and mechanical treatment unit can be provided on land and need not be mounted on the ship. Also, the installation space on the ship for the detoxification apparatus is reduced, thereby increasing the loading space for cargo, etc.

Also, as the seawater discharge line connecting the ballast water tank on the ship and the on-land detoxification facility can be disconnected and connected to each of the ships, one (one set of) on-land detoxification facility can be used for the liquid detoxification of more than one ship, thereby raising the operation rate of the on-land detoxification facility, reducing the number of units mounted on each ship for detoxification, and also lowering installation cost.

Furthermore, the detoxification units such as one of the chlorination means and the oxidization means and mechanical treatment unit is provided on land as the on-land detoxification facility, thereby minimizing the hull rework cost of the ship and minimizing the cost for installing a new detoxification apparatus on the ship.

The present invention also proposes to provide a carrier such as vehicle to mount the on-land detoxification facility thereon. As the carrier is configured to move freely on land so that the on-land detoxification facility can be moved closer to the ship freely to store the treated seawater in the ballast water tank in the ship, the length of seawater feeding lines can be minimized, thereby reducing the power for operating a feeding pump (not shown) and reducing the operating cost for detoxifying the seawater.

Also, in the case of storing the detoxified seawater in the ballast water tank of more than one ship, the on-land detoxification facility mounted on the carrier can be moved freely to each of the ships, thereby achieving the fast and efficient detoxification of ballast water.

According to the present invention, the at-sea detoxification facility is either one of the chlorination means or oxidization means, or the mechanical treatment unit. Untreated seawater is treated by the at-sea detoxification facility for killing microbes in the seawater. The treated seawater is stored in the ballast water tank via the seawater discharge line. Therefore detoxification units for detxoficating seawater can be provided at the sea and need not be mounted on the ship. Also, the installation space on the ship for the detoxification units is reduced, thereby increasing the loading space for cargo, etc.

Also, as the seawater discharge line connecting the ballast water tank on the ship and the at-sea detoxification facility provided on the sea, can be disconnected and connected to each of the ships, one (one set of) at-sea detoxification facility can be used for the liquid detoxification of more than one ship, thereby raising the operation rate of the at-sea detoxification facility, reducing the number of units mounted on each ship for detoxification, and also lowering installation cost.

Further, in the case of detoxifying the seawater of the ship anchoring at the sea, the seawater detoxified by the at-sea detoxification facility is fed to the ballast water tank inside the ship by moving the facility provided afloat and movable on the sea closer to the ship, thereby achieving the fast and efficient detoxification of ballast water whether the ship is anchored at a pier or offshore.

Furthermore, the detoxification units is provided on the sea and not on the ship as the at-sea detoxification facility, thereby minimizing the hull rework cost of the ship and minimizing the cost for installing a new detoxification apparatus on the ship.

### BRIEF DESCRIPTION OF THE DRAWINGS

FIG. 1 is a block diagram showing a detoxification apparatus for ship ballast water to explain the 1^{st} preferred embodiment of the present invention.
FIG. 2 is a block diagram corresponding to FIG.1 to explain the 2^{nd} preferred embodiment of the present invention.
FIG. 3 is a block diagram corresponding to FIG.1 to explain the 3^{rd} preferred embodiment of the present invention.
FIG. 4 is a block diagram corresponding to FIG.1 to explain the 4^{th} preferred embodiment of the present invention.
FIG. 5 is a block diagram corresponding to FIG.1 to explain the 5^{th} preferred embodiment of the present invention.
FIG. 6 is a block diagram corresponding to FIG.1 to explain the 6^{th} preferred embodiment of the present invention.
FIG. 7 is a block diagram corresponding to FIG.1 to explain the 7^{th} preferred embodiment of the present invention.
FIG. 8 is a block diagram corresponding to FIG.1 to explain the 8^{th} preferred embodiment of the present invention.
FIG. 9 is a block diagram corresponding to FIG.1 to explain the 9^{th} preferred embodiment of the present invention.
FIG. 10 is a block diagram corresponding to FIG.1 to explain the 10th preferred embodiment of the present invention.
FIG. 11 is a block diagram corresponding to FIG.1 to explain the 11th preferred embodiment of the present invention.
FIG. 12 is a block diagram corresponding to FIG.1 to explain the 12^{th} preferred embodiment of the present invention.
FIG. 13 is a block diagram corresponding to FIG.1 to explain the 13th preferred embodiment of the present invention.
FIG. 14 is a block diagram corresponding to FIG.1 to explain the 14^{th} preferred embodiment of the present invention.
FIG. 15 is a block diagram corresponding to FIG.1 to explain the 15^{th} preferred embodiment of the present invention.
FIG. 16 is a block diagram corresponding to FIG.1 to explain the 16^{th} preferred embodiment of the present invention.
FIG. 17 is a block diagram corresponding to FIG.1 to explain the 17^{th} preferred embodiment of the present invention.
FIG. 18 is a block diagram corresponding to FIG.1 to explain the 18^{th} preferred embodiment of the present invention.
FIG. 19 is a block diagram corresponding to FIG.1 to explain the 19^{th} preferred embodiment of the present invention.
FIG. 20 is a block diagram corresponding to FIG.1 to explain the 20^{th} preferred embodiment of the present invention.
FIG. 21 is a block diagram corresponding to FIG.1 to explain the 21^{st} preferred embodiment of the present invention.

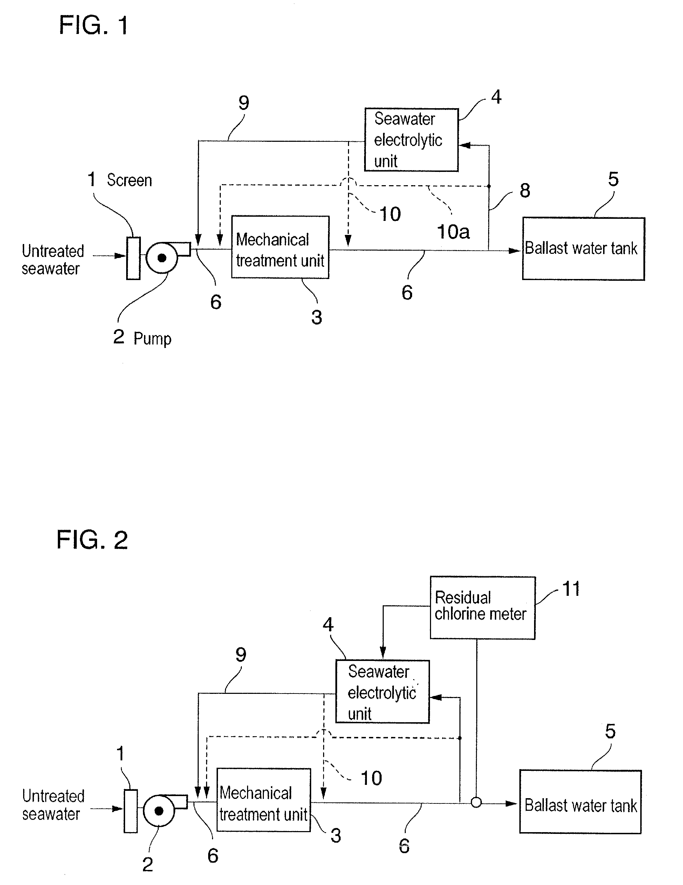

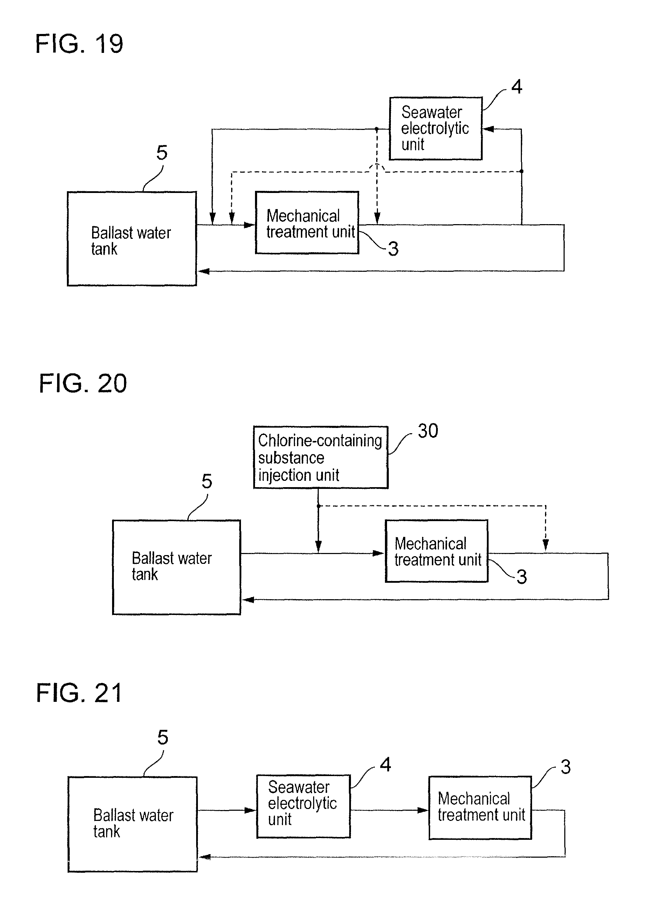

FIG. 21 is a block diagram corresponding to FIG.1 to explain the 21^{st} preferred embodiment of the present invention.

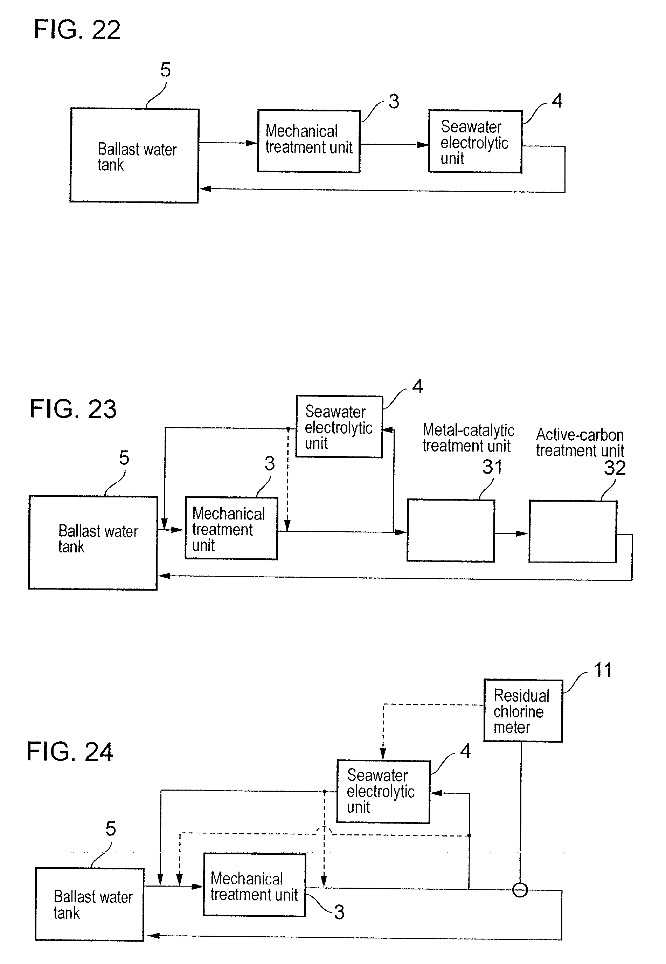

FIG. 23 is a block diagram corresponding to FIG.1 to explain the 23^{rd} preferred embodiment of the present invention.
FIG. 24 is a block diagram corresponding to FIG.1 to explain the 24^{th} preferred embodiment of the present invention.

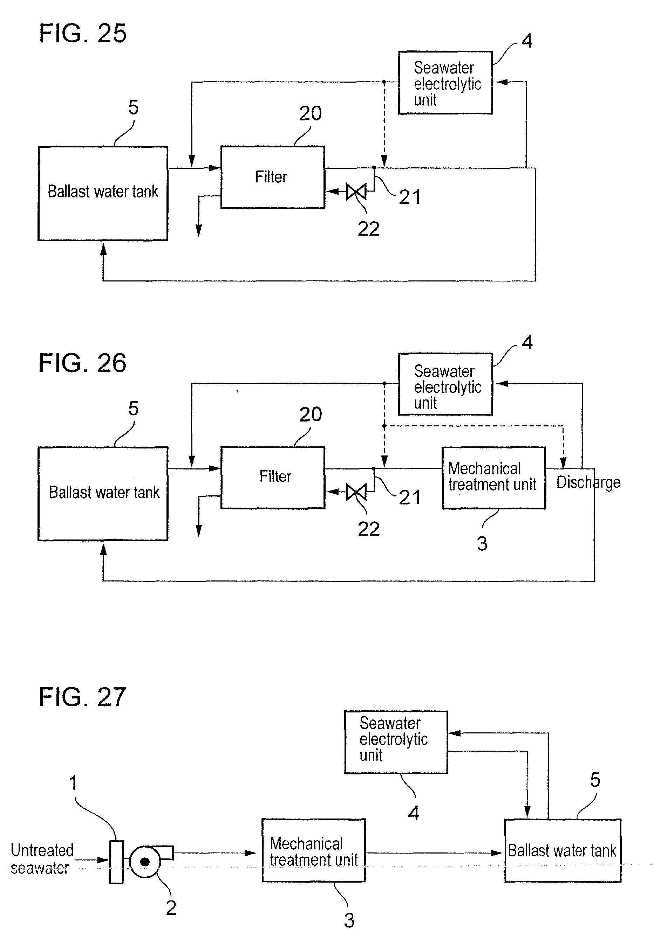

FIG. 25 is a block diagram corresponding to FIG.1 to explain the 25^{th} preferred embodiment of the present invention.
FIG. 26 is a block diagram corresponding to FIG.1 to explain the 26^{th} preferred embodiment of the present invention.
FIG. 27 is a block diagram corresponding to FIG.1 to explain the 27^{th} preferred embodiment of the present invention.

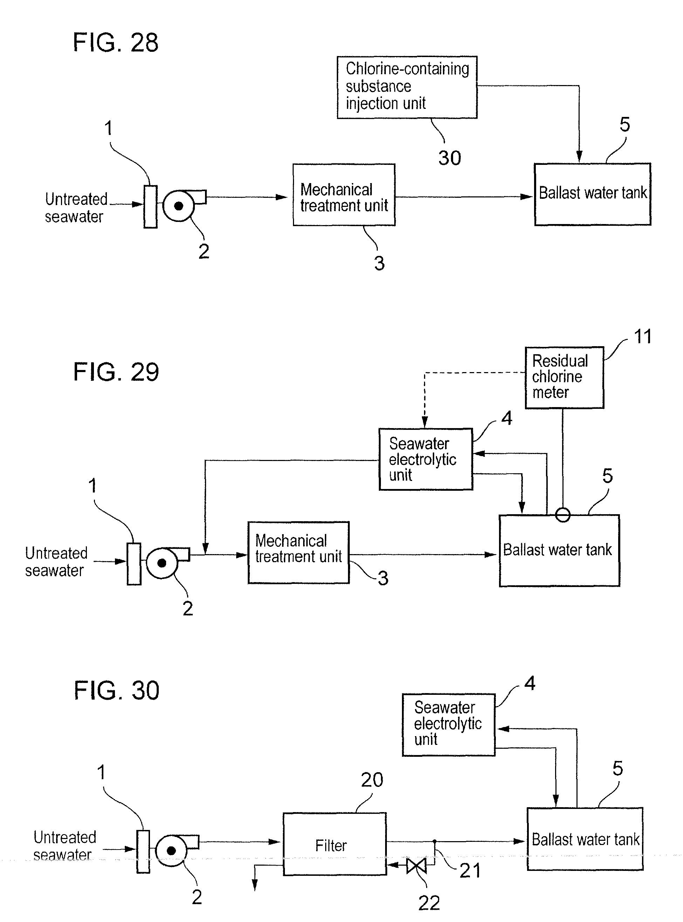

FIG. 28 is a block diagram corresponding to FIG.1 to explain the 28^{th} preferred embodiment of the present invention.
FIG. 29 is a block diagram corresponding to FIG.1 to explain the 29^{th} preferred embodiment of the present invention.
FIG. 30 is a block diagram corresponding to FIG.1 to explain the 30^{th} preferred embodiment of the present invention.

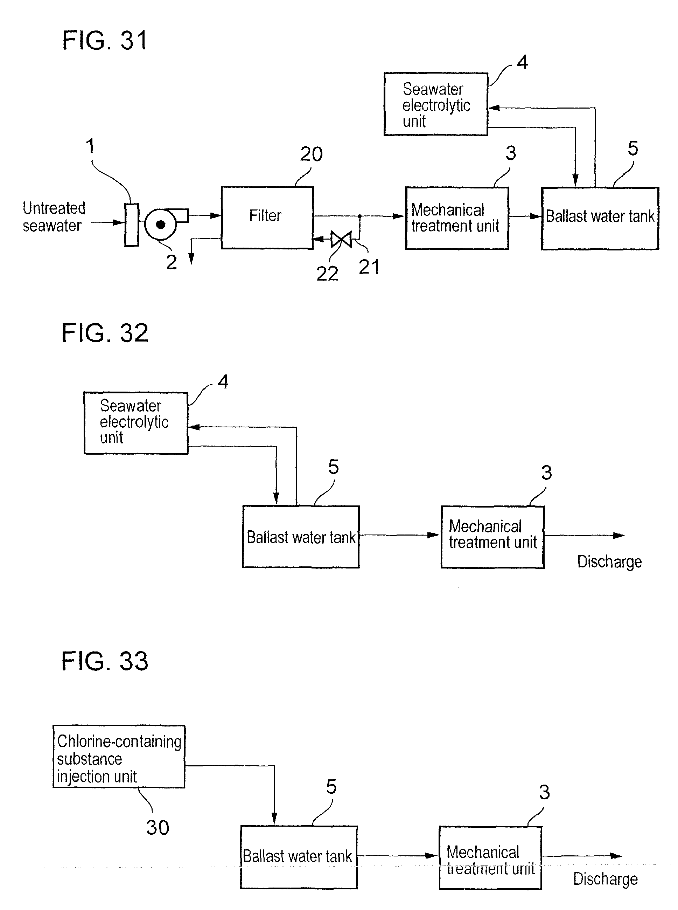

FIG. 31 is a block diagram corresponding to FIG.1 to explain the 31^{st} preferred embodiment of the present invention.
FIG. 32 is a block diagram corresponding to FIG.1 to explain the 32^{nd} preferred embodiment of the present invention.
FIG. 33 is a block diagram corresponding to FIG.1 to explain the 3^{rd} preferred embodiment of the present invention.

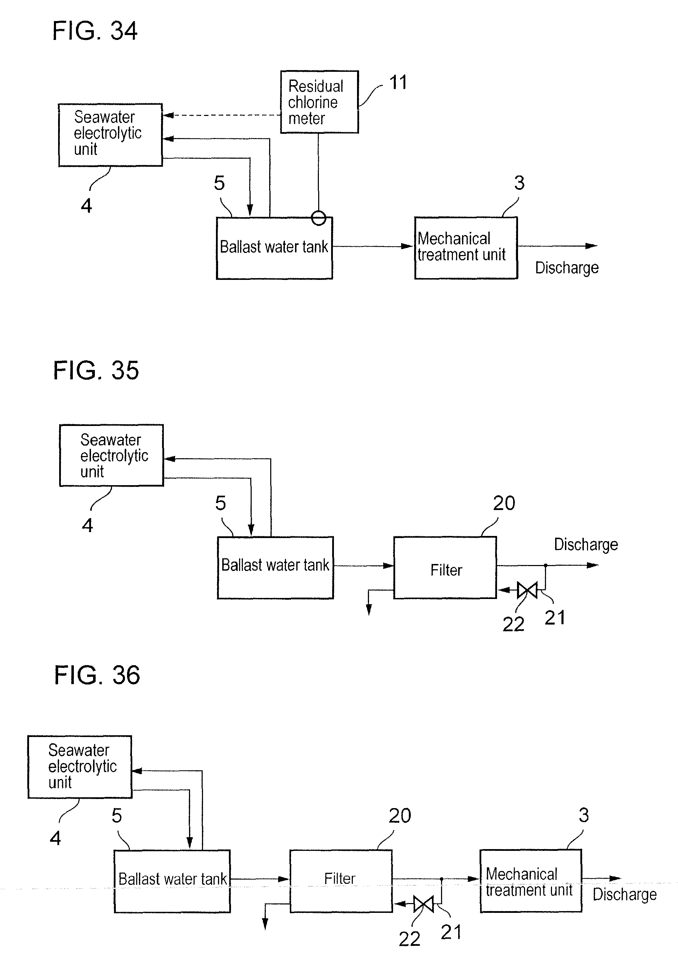

FIG. 34 is a block diagram corresponding to FIG.1 to explain the 34^{th} preferred embodiment of the present invention.
FIG. 35 is a block diagram corresponding to FIG.1 to explain the 35^{th} preferred embodiment of the present invention.
FIG. 36 is a block diagram corresponding to FIG.1 to explain the 36^{th} preferred embodiment of the present invention.

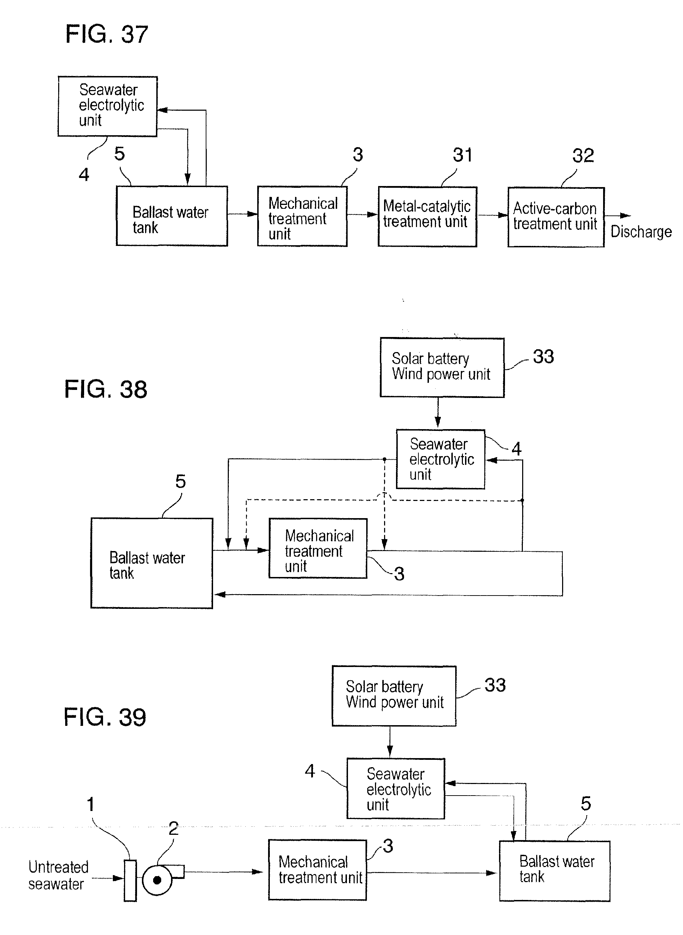

FIG. 37 is a block diagram corresponding to FIG.1 to explain the 37^{th} preferred embodiment of the present invention.
FIG. 38 is a block diagram corresponding to FIG.1 to explain the 38^{th} preferred embodiment of the present invention.
FIG. 39 is a block diagram corresponding to FIG.1 to explain the 39th preferred embodiment of the present invention.

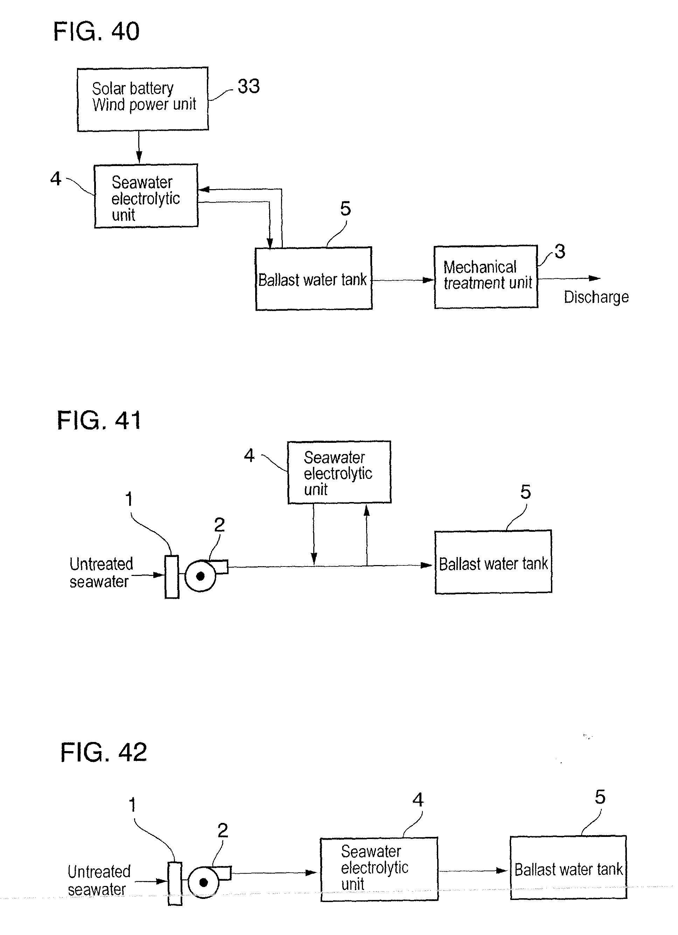

FIG. 40 is a block diagram corresponding to FIG.1 to explain the 40^{th} preferred embodiment of the present invention.
FIG. 41 is a block diagram corresponding to FIG.1 to explain the 41^{st} preferred embodiment of the present invention.
FIG. 42 is a block diagram corresponding to FIG.1 to explain the 42^{nd} preferred embodiment of the present invention.

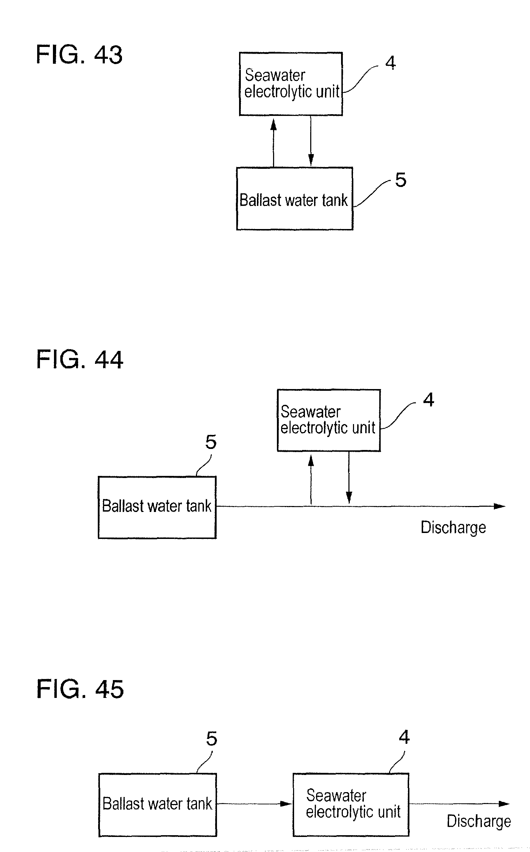

FIG. 43 is a block diagram corresponding to FIG.1 to explain the 43^{rd} preferred embodiment of the present invention.
FIG. 44 is a block diagram corresponding to FIG.1 to explain the 44^{th} preferred embodiment of the present invention.
FIG. 45 is a block diagram corresponding to FIG.1 to explain the 45^{th} preferred embodiment of the present invention.

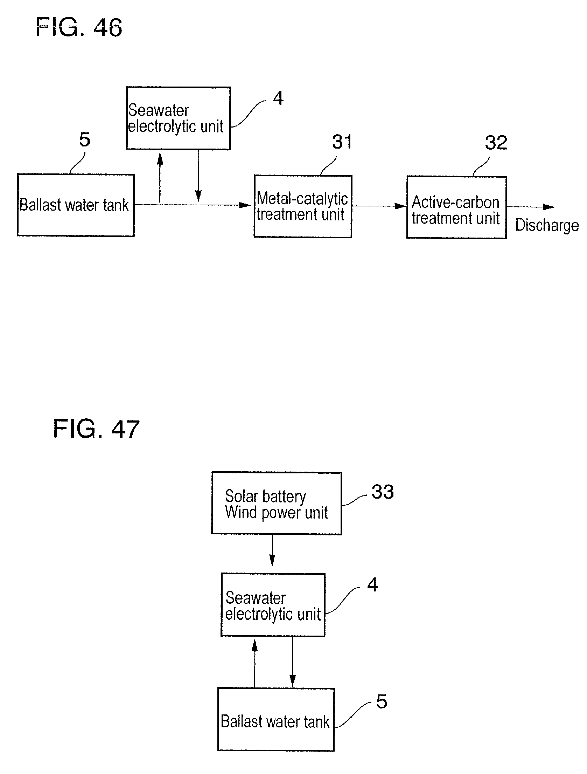

FIG. 46 is a block diagram corresponding to FIG.1 to explain the 46^{th} preferred embodiment of the present invention.
FIG. 47 is a block diagram corresponding to FIG.1 to explain the 47^{th} preferred embodiment of the present invention.

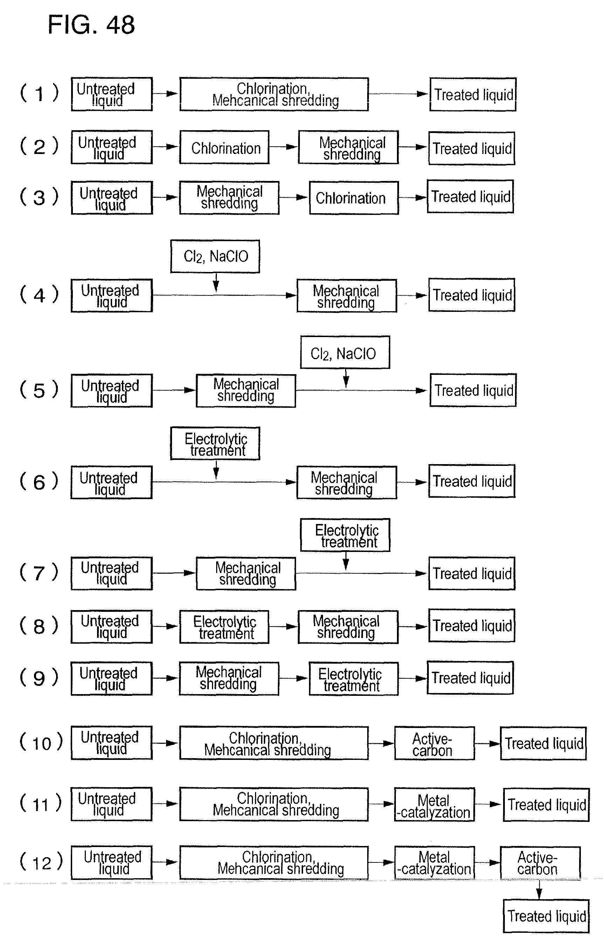

FIG. 48 is the first flow diagram showing main steps of each of above-mentioned embodiments.

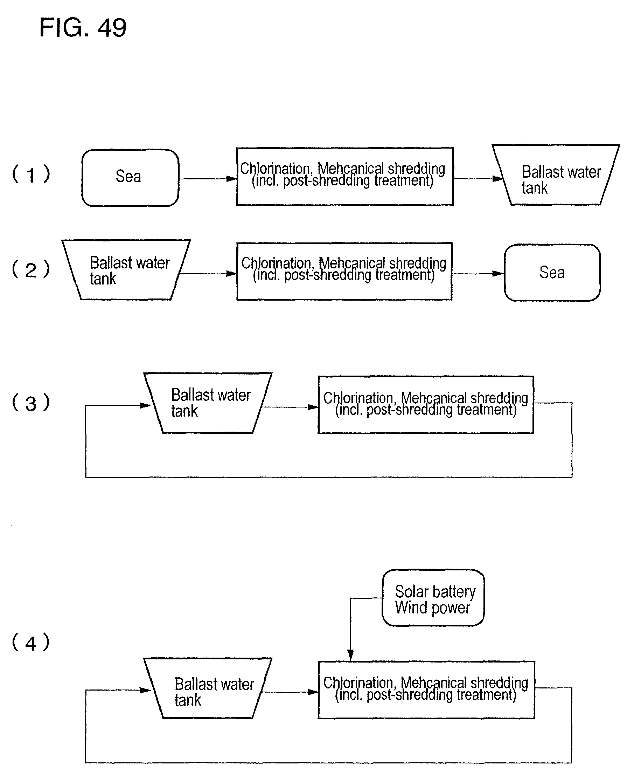

FIG. 49 is the second flow diagram showing main steps of each of above-mentioned embodiments.

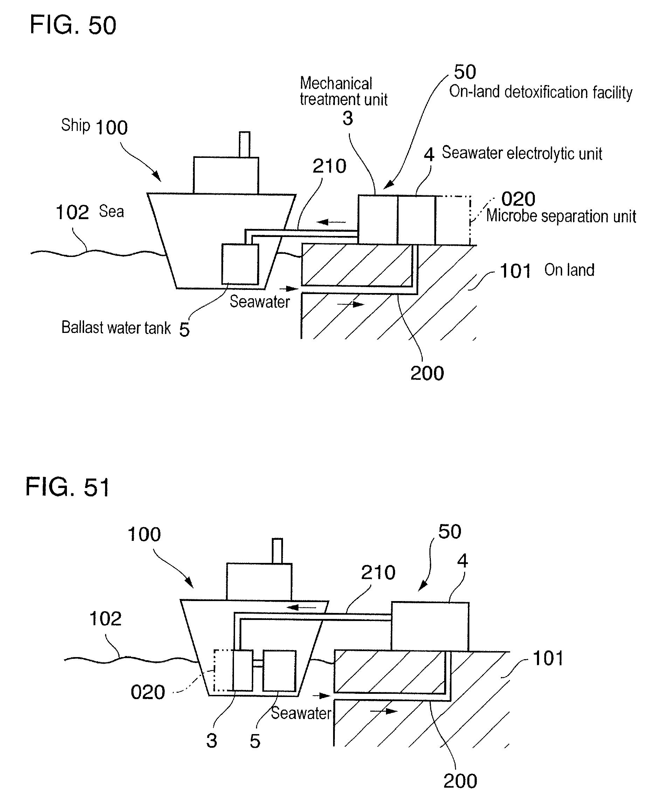

FIG. 50 is a block diagram showing a detoxification apparatus for ship ballast water to explain the 48^{th} preferred embodiment of the present invention.
FIG. 51 is a block diagram corresponding to FIG. 50 to explain the 49^{th} preferred embodiment of the present invention.

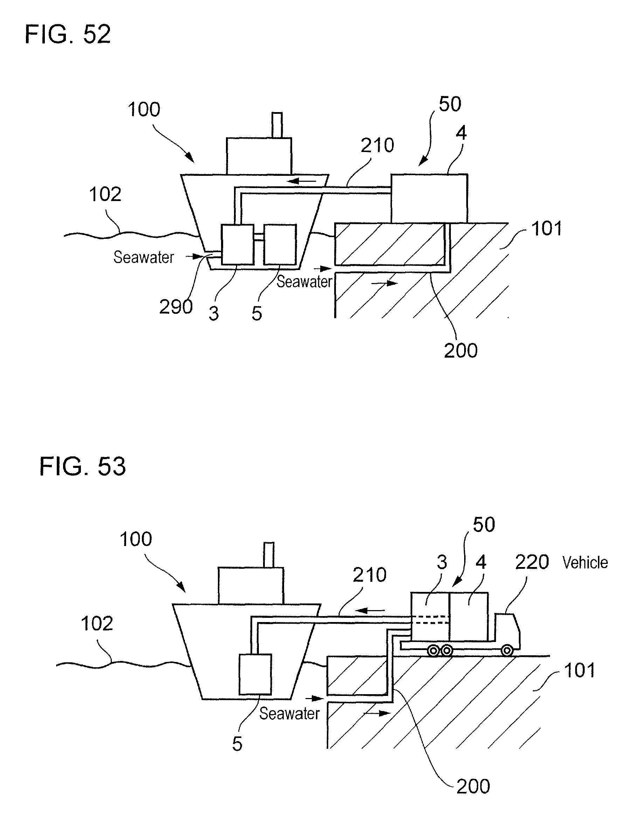

FIG. 52 is a block diagram corresponding to FIG. 50 to explain the 50^{th} preferred embodiment of the present invention.
FIG. 53 is a block diagram corresponding to FIG. 50 to explain the 51^{st} preferred embodiment of the present invention.

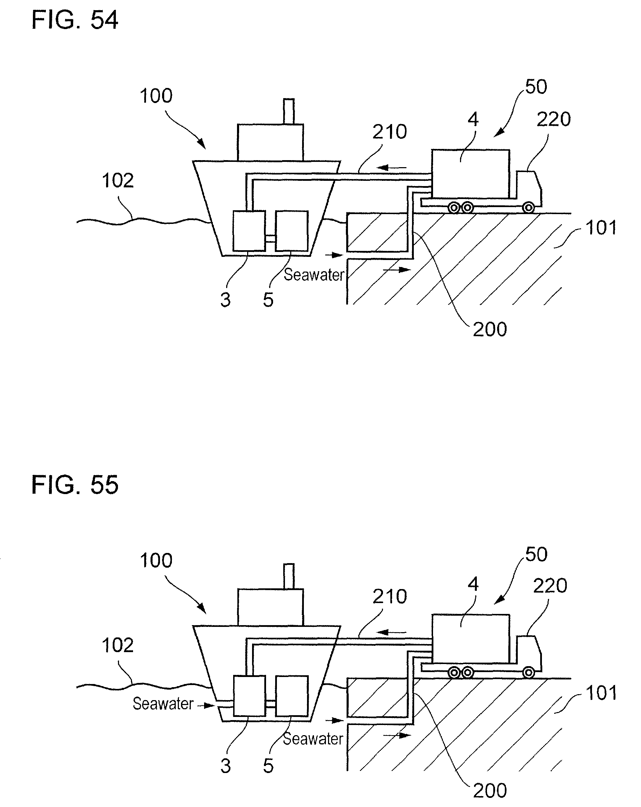

FIG. 54 is a block diagram corresponding to FIG. 50 to explain the 52^{nd} preferred embodiment of the present invention.
FIG. 55 is a block diagram corresponding to FIG. 50 to explain the 53^{rd} preferred embodiment of the present invention.

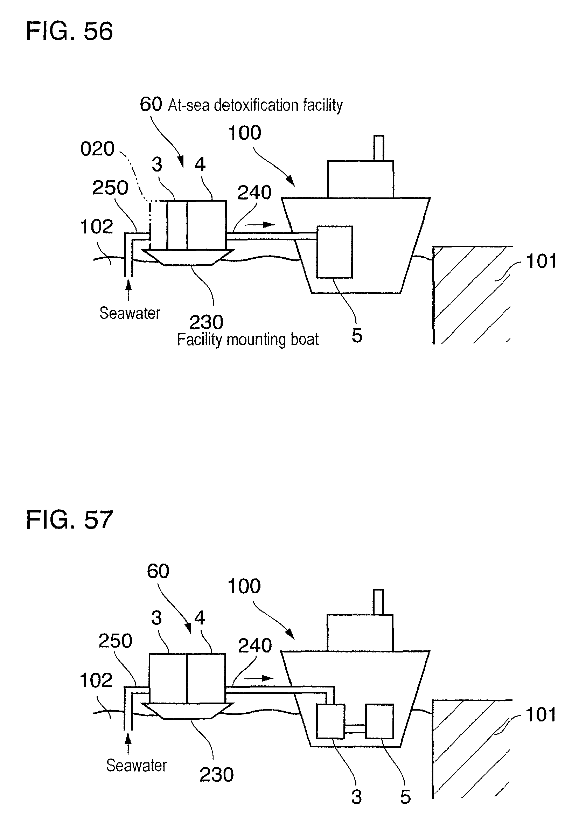

FIG. 56 is a block diagram corresponding to FIG.50 to explain the 54^{th} preferred embodiment of the present invention.
FIG. 57 is a block diagram corresponding to FIG. 50 to explain the 55^{th} preferred embodiment of the present invention.

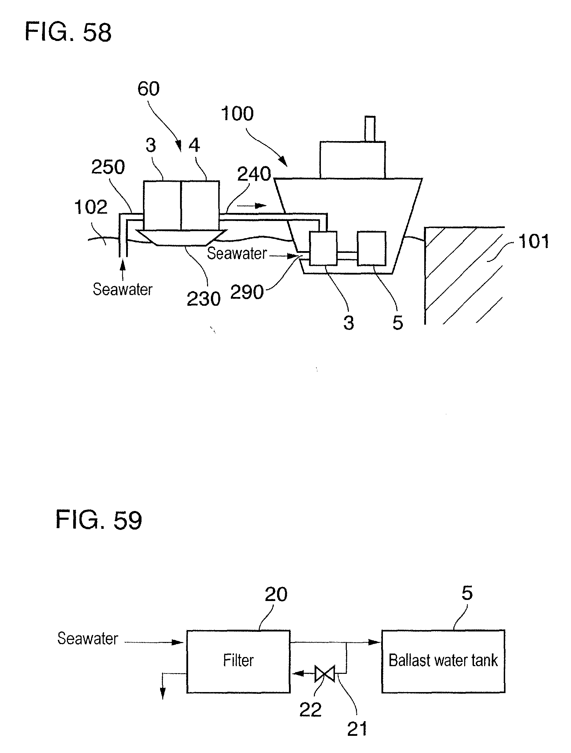

FIG. 58 is a block diagram corresponding to FIG. 50 to explain the 56^{th} preferred embodiment of the present invention.
FIG. 59 is a flow diagram showing a structure of a microbe mounting unit.

### DETAILED DESCRIPTION OF THE PREFERRED EMBODIMENTS

Preferred embodiments are explained, referring to the drawings. Regarding the elements described in the preferred embodiments, their sizes, material qualities, shapes, relative arrangements and so on, should not be understood to limit the present invention as they are, even if they are concretely specified.

FIG. 1 is a block diagram showing a detoxification apparatus for ship ballast water to explain the 1^{st} preferred embodiment of the present invention. FIGS. 2 to 47 show block diagrams of the 2^{nd} to 47^{th} preferred embodiments corresponding to FIG. 1. FIG.47 and FIG.48 are first and second flow diagrams showing main steps of each of above-mentioned preferred embodiments.

FIG.1 illustrating the 1^{st} embodiment shows a screen 1 for filtering foreign objects such as trash from untreated seawater and capturing the objects, and a pump 2 for delivering the seawater to a treatment line 6. A mechanical treatment unit 3 is provided for damaging microbes which were not captured by the screen 2, thereby killing microbes in the seawater.

The mechanical treatment unit 3 is preferably a perforated-plate treatment unit, in which is provided a plate with a number of small openings facing the flow of seawater and microbes in the seawater are damaged by a turbulent flow of the seawater caused when passing through the perforated plate, thereby killing microbes present in the seawater. The mechanical treatment unit should not be limited to a perforated-plate treatment unit as long as a unit functions to damage microbes in seawater to kill microbes.

A seawater electrolytic unit 4 electrolyzes the seawater which has been treated mechanically by the mechanical treatment unit 3, for producing sodium hypochlorite by decomposing the seawater by an electric current. The sodium hypochlorite produced by the seawater electrolytic unit 4 is injected into the treatment line 6 and then the treated seawater is stored in a ballast water tank 5.

In the 1^{st} preferred embodiment, the untreated liquid passes through the screen 1 for filtering off foreign objects such as trash, thereby capturing the foreign objects, and fed to the mechanical treatment unit 3 by the pump 2 via the treatment line 6.

The mechanical treatment unit 3 damages microbes in the seawater by allowing the seawater to pass through the perforated plate, thereby killing microbes. All or part of the seawater treated mechanically by the mechanical treatment unit 3 is fed to the seawater electrolytic unit 4 via an extraction line 8. The seawater electrolytic unit 4 electrolyzes the seawater to sodium hypochlorite.

The sodium hypochlorite is injected in the treatment line 6 upstream of the mechanical treatment unit 3 via an injection line 9 shown with a solid line, or in the treatment line 6 downstream of the mechanical treatment unit 3 via an injection line 10 shown with a broken line. Thus, the remaining microbes in the seawater can be killed by injecting the sodium hypochlorite.

Alternatively, the seawater can be circulated via a circulation line 10a to the mechanical treatment unit 3 for treating the seawater only mechanically.

Thus, the seawater is fed to the mechanical treatment unit 3 for killing microbes in the seawater, and then to the seawater electrolytic unit 4 for killing microbes present in the seawater by injecting the sodium hypochlorite which was produced from the seawater in the unit 4. The detoxified seawater is stored in the ballast water tank.

In this embodiment, the microbes are mainly those that are toxic or pathogenic or those that disturb ecosystems, such as zooplankton and its cyst, phytoplankton and its cyst, bacteria, fungi and virus.

Detoxification means in the above description to kill microbes that cause seawater pollution or damage to human beings and creatures in the sea or those that disturb ecosystems.

The sodium hypochlorite in the above embodiment is most suitable as aforesaid chlorine-containing substance, however, chlorine, sodium, chloric acid, ion thereof or sodium chloride can be used.

The substance possessing oxidizing properties also includes oxidants such as hydrogen peroxide and ozone, besides the chlorine-containing substance.

Meanwhile, the chlorine-containing substance can be added externally as chemicals.

According to the embodiment, the extinction of microbes of every size can be positively achieved by applying the mechanical treatment for killing comparatively large microbes in the turbulent flow caused when the seawater passes through the perforated plate, combined with the chlorination for killing bacteria and the like by adding the sodium hypochlorite produced by the seawater electrolytic unit 4. Thus a pressure drop in the mechanical treatment unit 3 is decreased and the load for operating the unit 3 is reduced.

With this structure, less power is needed to operate the mechanical treatment unit 3 for purifying the seawater, thereby downsizing the unit with smaller capacity of driving device. Moreover, the input of the sodium hypochlorite can be reduced in the chlorination by injecting sodium hypochlorite produced by the electrolytic unit 4 into the seawater, for all that is needed is to kill mainly bacteria to which chlorination is very effective.

Also, with the combination of the chlorination for killing bacteria by injecting the sodium hypochlorite produced by the seawater electrolytic unit 4 to the seawater, and the mechanical treatment by the mechanical treatment unit 3 for killing comparatively large microbes, the sodium hypochlorite is needed only for removing bacteria, so that the input of sodium hypochlorite can be reduced compared to the case sodium hypochlorite is used for removing both microbes and bacteria.

Accordingly, the residual sodium hypochlorite decreases drastically, corrosion of succedent units by residual sodium hypochlorite during the detoxification is suppressed, durability of the succedent units is improved, and marine contamination caused when discharging the sodium hypochlorite to sea can be suppressed.

In Figs.2-47 illustrating 2^{nd} to 47^{th} embodiments correspondingly, parts shown in the first embodiment bear the same reference numerals.

In the 2^{nd} embodiment illustrated in FIG. 2, a residual chlorine meter 11 measures the residual chlorine level and input the measured chlorine level into the seawater electrolytic unit 4 after the mechanical treatment by the mechanical treatment unit 3 for killing comparatively large microbes and the chlorination by the seawater electrolytic unit 4 for killing bacteria by adding to the seawater via a treatment line 6 the sodium hypochlorite produced by the seawater electrolytic unit 4.

In the 2^{nd} embodiment, the residual chlorine meter 11 measures the level of residual chlorine in the seawater which has been treated mechanically and chlorinated. The measured residual chlorine level is inputted to the seawater electrolytic unit 4, and the seawater electrolytic unit 4 controls electrolytic current so as to control the amount of the sodium hypochlorite to be produced by the seawater electrolytic unit 4.

According to the 2^{nd} embodiment, the seawater electrolytic unit 4 controls electrolytic current based on the measured residual chlorine level so as to control the amount of the sodium hypochlorite produced by the seawater electrolytic unit 4, thereby precisely controlling the input of the sodium hypochlorite to meet a target value, and the treatment cost using the sodium hypochlorite is minimized.

The rest of the structure is the same as in the 1^{st} embodiment . The parts shown in the first embodiment bear the same reference numerals.

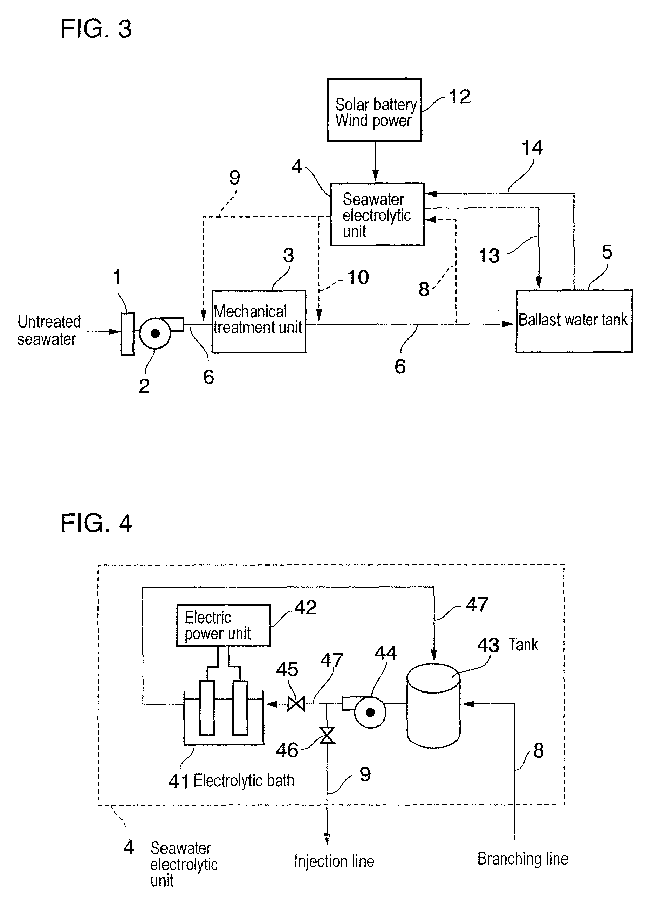

In FIG.3 illustrating the 3^{rd} embodiment, in addition to or without the mechanical treatment and chlorination as described in the 1^{st} embodiment, a chlorination is applied by the seawater electrolytic unit 4 by circulating the seawater stored in the ballast water tank 5 via circulation lines 13,14 and utilizing the sodium hypochlorite produced by the seawater electrolytic unit 4, thereby killing bacteria present in the seawater. Further, according to the 3^{rd} embodiment, natural energy such as solar battery and a wind power 12 is used as an electric source of the seawater electrolytic unit 4.

With this structure, the natural energy being used as electric source of the seawater electrolytic unit 4, the cost for the chlorination utilizing the sodium hypochlorite can be reduced and the detoxification of ballast water using the electrolytic unit 4 can be achieved with the minimum engine power of the ship when the ship is out to sea.

The rest of the structure is the same as in the 1^{st} embodiment. The parts shown in the first embodiment bear the same reference numerals.

In the 4^{th} embodiment illustrated in FIG.4, the electrolytic unit 4 is an electrolytic unit circulation system.

FIG.4 shows a storage tank 43, a pump 44, a electrolytic bath 41 and a electric power unit 42 for controlling electrical current of the electrolytic bath 41. The seawater used for chlorination is fed to the storage tank 43 via the extraction line 8.

A circulation line 49 is formed to circulate the seawater in the storage tank 43 to the electrolytic bath 41 via the pump 44 and back to the tank 43. Sodium hypochlorite is produced from the seawater in the electrolytic bath 41, and the sodium hypochlorite being injected into the treatment line 6 shown in FIG.1 via the injection line 9 (or the injection line 10 shown in FIG.1). 45 and 46 are open-close valves.

The sodium hypochlorite is injected into the treatment line 6 in the upstream of the mechanical treatment 3 via an injection line 9, or in the treatment line 6 in the downstream of the mechanical treatment 3 via an injection line 10 as is in the 1^{st} embodiment.

The seawater may be chlorinated in the circulation type electrolyzer system before or after mechanical treatment, and the produced sodium hypochlorite may be used for killing bacteria in the seawater.

According to the 4^{th} embodiment, the sodium hypochlorite contained in the seawater circulating in the circulation line 47, is fed to the electrolytic bath 41, so the pH level of the seawater supplied to the bath 41 is lowered, and as a result adhesion of scale to the electrolytic bath 41 is prevented.

As for the rest, the structure is the same as that of the 1^{st} embodiment. The parts shown in the first embodiment bear the same reference numerals.

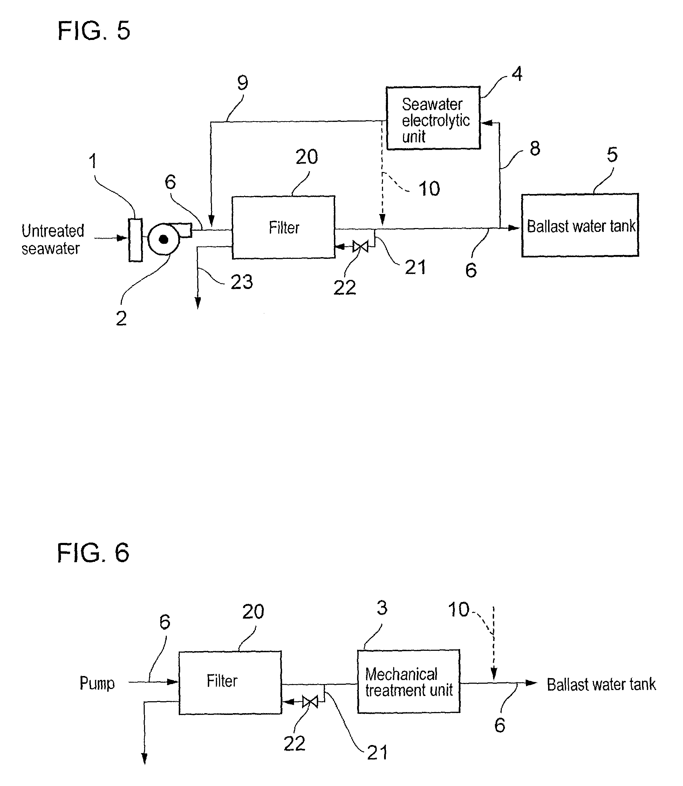

In the 5^{th} embodiment illustrated in FIG. 5, there provided are a treatment line 6 and a filter 20 in place of the mechanical treatment unit 3 of the previous embodiments. 21 is a backwash line and 22 is an open-close valve to control the opening of the backwash line 21.

In the 5^{th} embodiment, large microbes present in the seawater can be removed by running the seawater through the filter 20. The sodium hypochlorite is injected into the treatment line 6 either upstream or downstream of the filter 20 via an injection line 9 or 10 in a similar way as the 1^{st} embodiment. Thus, remaining microbes in the seawater can be killed by injecting the sodium hypochlorite. According to the 5^{th} embodiment, by selecting an optimal mesh for the filter 20 for removing microbes, comparatively large microbes can be securely captured and the captured microbes can be easily removed by utilizing the backwash of the backwash line 21.

The rest of the structure is the same as in the 1^{st} embodiment. The parts shown in the first embodiment bear the same reference numerals.

In the 6^{th} embodiment illustrated in FIG. 6, there provided is the same mechanical treatment unit 3 as of the previous embodiments located either in the downstream or in the upstream of the filter 20.

According to the 6^{th} embodiment, by the filtration of the filter 20 combined with the mechanical treatment of the mechanical treatment unit 3, the treatment efficiency of microbes improves and the stress from chlorination on the downstream side decreases.

The rest of the structure is the same as in the v embodiment. The parts shown in the first embodiment bear the same reference numerals.

It is also preferable that a centrifugal separator (not shown in figures) is used for separating and removing microbes from the seawater by centrifugalization instead of the filter 20.

Alternatively, in each of aforementioned embodiments, besides the chlorination, oxidization (not shown in figures) can be performed by adding oxidizing substance to the seawater. The oxidizing substance such as hydrogen peroxide and ozone besides the aforementioned chlorine-containing substance can be used.

The following embodiments comprise different means but share the same effect of extinction and sterilization of microbes in seawater.

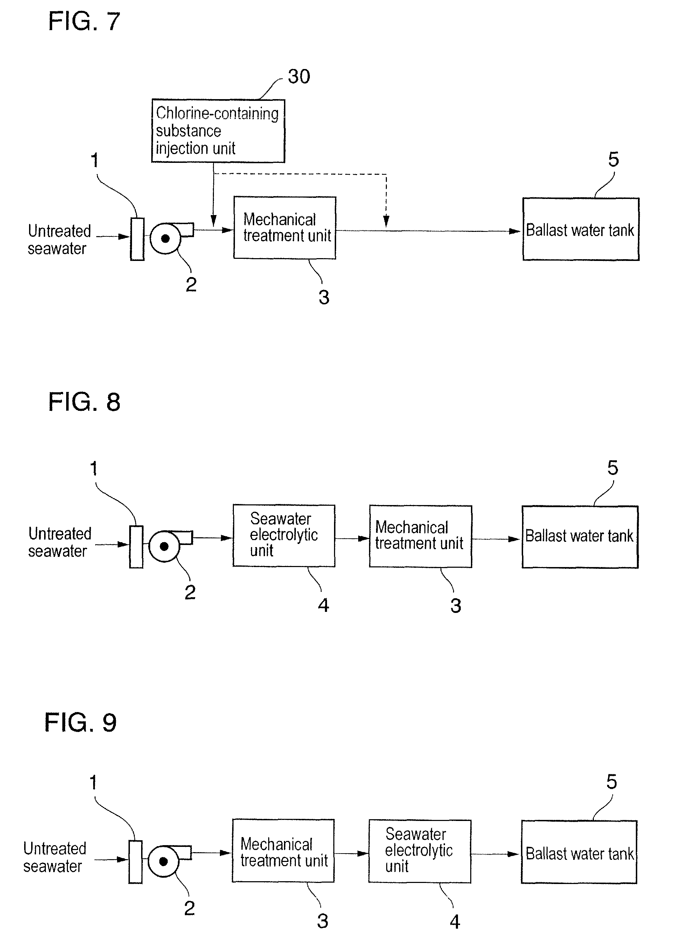

In the 7^{th} embodiment illustrated in FIG.7, the seawater is fed to the mechanical treatment unit for killing microbes in the seawater before or after being chlorinated for killing bacteria by injecting chlorine-containing substance to the untreated seawater from a chlorine-containing substance injection unit 30, and then is stored in the ballast water tank 5.

The chlorine-containing substance is preferably composed by chlorine, sodium hypochlorite, sodium chlorite, chloric acid, or their ions or sodium chloride. The sodium hypochlorite is the most preferable among them.

In the 8^{th} embodiment illustrated in FIG.8, the untreated seawater is fed to the seawater electrolytic unit 4 for the chlorination and then to the mechanical treatment unit 3 for treating mechanically and stored in the ballast water tank 5.

In the 9^{th} embodiment illustrated in FIG.9, in reverse order from the 8^{th} embodiment, the untreated liquid is fed to the mechanical treatment unit 3 for the mechanical treatment and then to the seawater electrolytic unit 4 for the chlorination and stored in the ballast water tank 5.

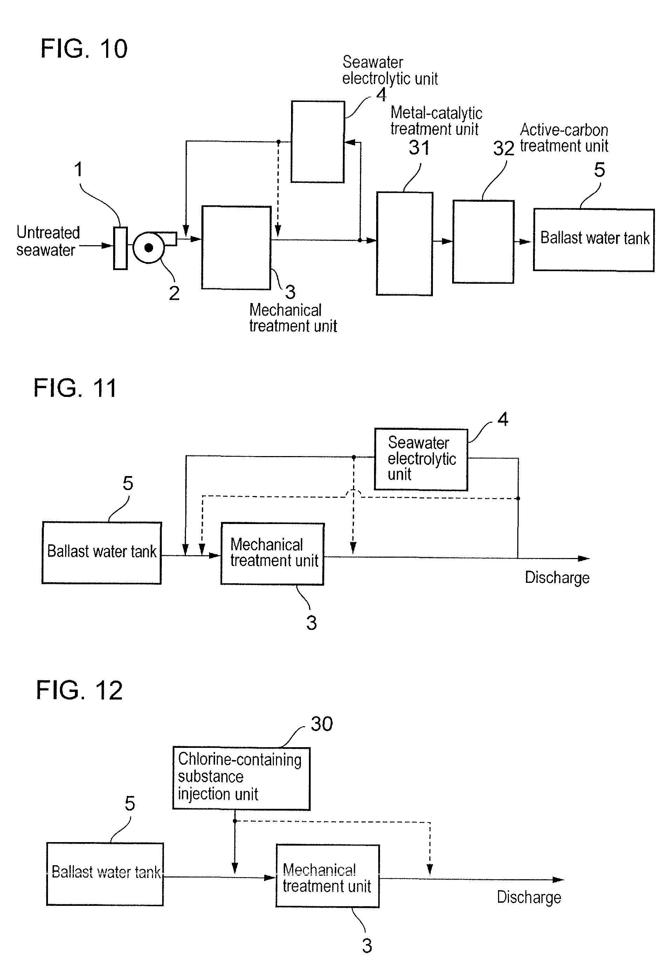

In the 10^{th} embodiment illustrated in FIG.10, after the chlorination by the seawater electrolytic unit 4 and mechanical treatment by the mechanical treatment unit 3, the seawater is fed to a metal-catalytic treatment unit 31 for metal-catalyzing and then to an active carbon treatment unit 32 for removing trihalomethane and is stored in the ballast water tank 5.

The aforesaid metal catalyst is preferably metal or chemical compound containing more than one kind from elements of VIIA group such as Mn, Tc and Re, or elements of VIII group such as Fe, Co, Ni, Ru, Rh, Pd, Os, Ir and Pt.

With this structure, the remaining HClO can be deoxidized by the metal catalyst as shown in the following reaction formula, thereby achieving the liquid detoxification after chlorination. HClO+Mon-1• HCl+Mon (M:metal)

Carcinogens tend to take place in the treated liquid after chlorination. By using active carbon for removing trihalomethane, the carcinogens can be removed.

According to the 10^{th} embodiment, the carcinogens are removed from the chlorinated liquid by using the active carbon, and HClO is deoxidized to be harmless, thereby improving the liquid detoxification and purification.

In the 10^{th} embodiment, after removing trihalomethane by the active-carbon treatment unit 32, the treated seawater may be fed to the metal-catalytic treatment unit 31 for the metal-catalyzing. Alternatively, either one of the treatments may be applied solely.

In the 11th embodiment illustrated in FIG.11, the seawater stored in the ballast water tank 5 is fed to the seawater electrolytic unit 4 for the chlorination and then to the mechanical treatment unit for the mechanical treatment, thereby killing microbes or bacteria present in the seawater for liquid detoxification as with the 1^{st} embodiment, and the detoxified liquid is discharged into the sea.

In the 12^{th} embodiment illustrated in FIG.12, the seawater is fed to the mechanical treatment unit 3 for killing microbes in the seawater before or after the chlorination for killing bacteria by injecting chlorine-containing substance to the untreated seawater from a chlorine-containing substance injection unit 30 as with the 7^{th} embodiment, and the detoxified liquid is discharged into the sea.

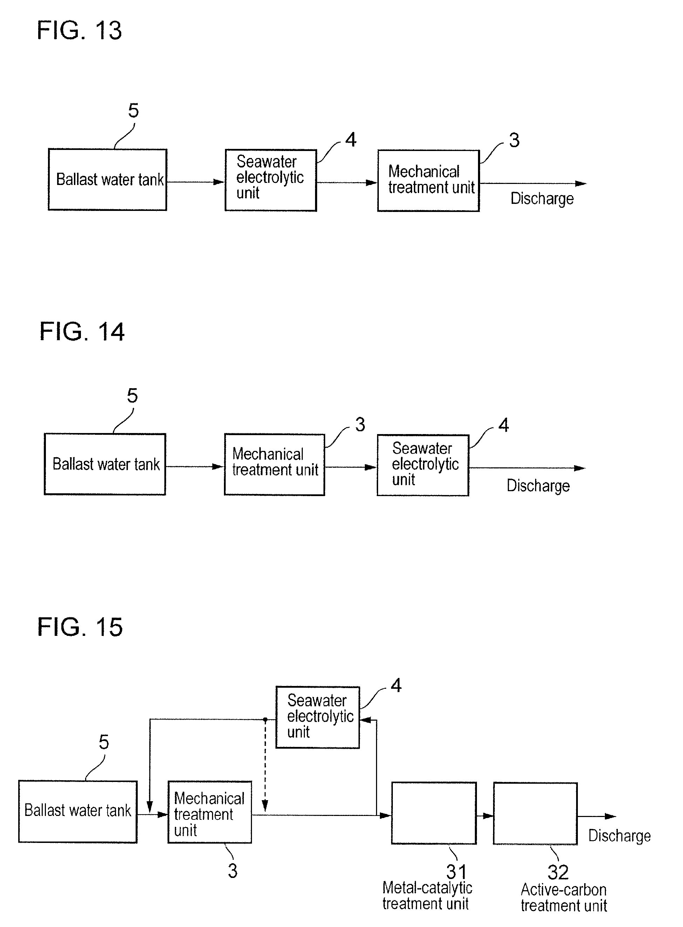

In the 13th embodiment illustrated in FIG.13, the seawater stored in the ballast water tank 5 is fed to the seawater electrolytic unit 4 for the chlorination and then to the mechanical treatment unit for mechanical treatment, thereby killing microbes and bacteria present in the seawater for detoxifying seawater as with the 8^{th} embodiment (FIG.8), and the detoxified liquid is discharged into the sea.

In the 14^{th} embodiment illustrated in FIG.14, in reverse order from the 13th embodiment, the seawater is fed to the mechanical treatment unit 3 for the mechanical treatment, and then to the seawater electrolytic unit 4 for the chlorination as with the 9^{th} embodiment(FIG.9), thereby killing microbes and bacteria in the seawater, and the detoxified liquid is discharged into the sea.

In the 15^{th} embodiment illustrated in FIG.15, the seawater is fed to a catalytic treatment unit 31 for metal-catalyzing after being chlorinated by the seawater electrolytic unit 4 and treated mechanically by the mechanical treatment unit 3 as with the 10^{th} embodiment (FIG.10), and further the treated seawater is fed to an active carbon treatment unit 32 for removing trihalomethane, thereby killing microbes and bacteria present in the seawater for liquid detoxification. The detoxified liquid is discharged into the sea.

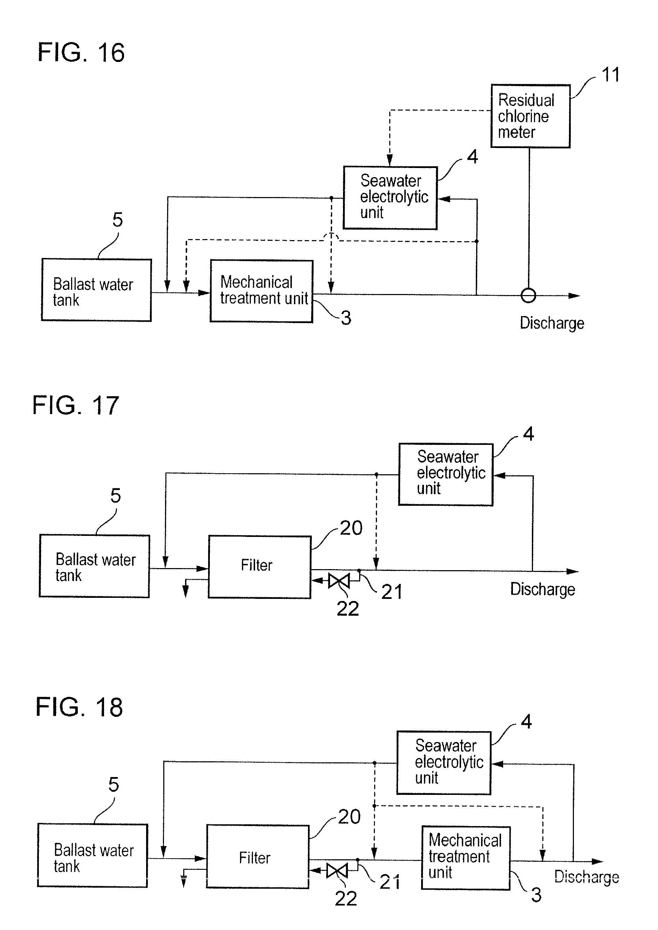

In the 16^{th} embodiment illustrated in FIG.16, a residual chlorine meter 11 measures the level of residual chlorine, i.e. chloride concentration in the treated seawater, after the untreated liquid stored in the ballast water tank 5 is fed to the mechanical treatment unit 3 for the mechanical treatment and then to the seawater electrolytic unit 4 for the chlorination as with the 2^{nd} embodiment. The electrolytic current of the seawater electrolytic unit 4 is controlled based on the measured residual chlorine level so as to control the amount of the sodium hypochlorite to be produced by the seawater electrolytic unit, thereby killing microbes and bacteria for liquid detoxification and the detoxified liquid is discharged into the sea.

In the 17^{th} embodiment illustrated in FIG.17, the seawater stored in the ballast water tank 5 is fed to a filter 20 provided on a treatment line (21:backwash line, 22:open-close valve for controlling the opening of the backwash line 21) as with the 5^{th} embodiment (FIG.5). Large microbes present in the seawater can be removed by running the seawater through the filter 20. The sodium hypochlorite produced from the seawater by the seawater electrolytic unit is injected into the treatment line either upstream or downstream of the filter 20, thereby killing bacteria for liquid detoxification and the detoxified liquid is discharged into the sea.

In the 18^{th} embodiment illustrated in FIG.18, the seawater is fed to the filer 20 and then to the mechanical treatment unit 3 which is provided in the downstream of the filter 20, thereby killing microbes and bacteria for liquid detoxification. The detoxified liquid is discharged into the sea.

In the 19^{th} embodiment illustrated in FIG.19, the seawater stored in the ballast water tank 5 is fed to the seawater electrolytic unit 4 for the chlorination and is fed to the mechanical treatment unit for the mechanical treatment, thereby killing microbes and bacteria present in the seawater as with the 11th embodiment (FIG.11), and the seawater is detoxified by circulating to the ballast water tank 5 repeatedly.

This structure enables the detoxification of the ballast water stored in the ballast water tank 5 when the ship is underway, reducing the detoxification time or even omitting the detoxification process when the ballast water is discharged from the ship. The 12^{th} to 25^{th} embodiments as described below share the same effect as the foregoing embodiments.

In the 20^{th} embodiment illustrated in FIG.20, the seawater stored in the tank 5is fed to the mechanical treatment unit 3 for the mechanical treatment before or after he chlorination by the chlorine-containing substance injection unit 30 for injecting chlorine-containing substance to the seawater, thereby killing microbes and bacteria present in the seawater as with the 12^{th} embodiment (FIG.12), and the seawater is detoxified by circulating to the ballast water tank 5 repeatedly.

In the 21^{st} embodiment illustrated in FIG.21, the seawater stored in the ballast water tank 5 is to the seawater electrolytic unit 4 for the chlorination and then to the mechanical treatment unit 3 for the mechanical treatment, thereby killing microbes or bacteria present in the seawater as with the 13th embodiment (FIG.13), and the seawater is detoxified by circulating to the ballast water tank 5 repeatedly.

In the 22^{nd} embodiment illustrated in FIG.22, the seawater stored in the ballast water tank 5 is fed to the mechanical treatment unit 3 for the mechanical treatment and then to the seawater electrolytic unit 4 for the chlorination, thereby killing microbes and bacteria present in the seawater as with the 14^{th} embodiment (FIG.14), and the seawater is detoxified by circulating to the ballast water tank 5 repeatedly.

In the 23^{rd} embodiment illustrated in FIG.23, after the chlorination by the seawater electrolytic unit 4 and the mechanical treatment by the mechanical treatment unit 3, the seawater is fed to a metal-catalytic treatment unit 31 for metal-catalyzing and to a active carbon treatment unit 32 for removing trihalomethane, thereby killing microbes and bacteria present in the seawater as with the 15^{th} embodiment (FIG.15), and the seawater is detoxified by circulating to the ballast water tank 5 repeatedly.

In the 24^{th} embodiment illustrated in FIG.24, the residual chlorine meter 11 measures the level of residual chlorine, i.e. chloride concentration in the treated seawater after the seawater stored in the ballast water tank 5 is mechanical-treated by the mechanical-treatment unit and chlorinated by the seawater electrolytic unit by injecting sodium hypochlorite. The electrolytic current of the seawater electrolytic unit 4 is controlled based on the measured residual chlorine level so as to control the amount of the sodium hypochlorite to be produced by the seawater electrolytic unit, thereby killing microbes and bacteria present in the seawater as with the 16^{th} embodiment (FIG.16), and the seawater is detoxified by circulating to the ballast water tank 5 repeatedly.

In the 25^{th} embodiment illustrated in FIG.25, the seawater stored in the ballast water tank 5 is fed to a filter 20 provided on a treatment line (21:backwash line, 22:open-close valve for controlling the opening of the backwash line 21), thereby removing large microbes present in the seawater. And the sodium hypochlorite produced from the seawater by the seawater electrolytic unit is injected into the treatment line either upstream or downstream of the filter 20, thereby killing bacteria for liquid detoxification as with the 17^{th} embodiment (FIG.17). The seawater is detoxified by circulating seawater to the ballast water tank 5 repeatedly.

In the 26^{th} embodiment illustrated in FIG.26, the seawater is fed to the filer 20 and then to the mechanical treatment unit 3 provided downstream of the filter for the mechanical treatment, thereby killing microbes and bacteria for liquid detoxification as with the 18 ^{th} embodiment (FIG.18), and the seawater is detoxified by circulating to the ballast water tank 5 repeatedly.

In the 27^{th} embodiment illustrated in FIG.27, the untreated seawater is fed to the mechanical treatment unit 3 and then to the ballast water tank 5, and further to the seawater electrolytic unit 4 for the chlorination, thereby killing microbes and bacteria in the seawater. The seawater circulates between the tank 4 and electrolytic unit 4 for the detoxification.

In the 28^{th} embodiment illustrated in FIG.28, the untreated seawater is fed to the mechanical treatment unit 3 for the mechanical treatment and stored in the ballast water tank 5. And the chlorine-containing substance injection unit 30 injects chlorine-containing substance to the seawater stored in the tank 5, thereby detoxifying the seawater stored in the ballast water tank 5.

In the 29^{th} embodiment illustrated in FIG.29, a residual chlorine meter 11 measures the level of residual chlorine, i.e. chloride concentration in the treated seawater after the mechanical treatment by the mechanical-treatment unit 3 and storing in the ballast water tank 5 and then chlorinating the seawater stored in the tank 5 by the seawater electrolytic unit 4. The electrolytic current of the seawater electrolytic unit 4 is controlled based on the measured residual chlorine level so as to control the amount of the sodium hypochlorite to be produced by the seawater electrolytic unit 4. Thus, the seawater stored in the ballast water tank 5 is detoxified.

In the 30^{th} embodiment illustrated in FIG.30, the untreated seawater is fed to the filter 20 for separating microbes, thereby removing comparatively large microbes present in the seawater and stored in the ballast water tank 5. The seawater stored in the ballast water tank 5 is detoxified by circulating seawater between the tank 5 and electrolytic unit 4.

In the 31^{st} embodiment illustrated in FIG.31, the untreated seawater is fed to the filter 20 for separating microbes, thereby removing comparatively large microbes present in the seawater, and to the mechanical treatment unit 3 for the mechanical treatment and stored in the tank 5. The seawater circulates between the tank 5 and electrolytic unit 4 for the chlorination, thereby killing bacteria present in the seawater. Thus the seawater stored in the ballast water tank 5 is detoxified.

In the 32^{nd} embodiment illustrated in FIG.32, the seawater stored in the tank 5 circulates between the tank and electrolytic unit 4 for the chlorination, thereby killing bacteria present in the seawater. The chlorinated seawater is fed to the mechanical treatment unit 3 for the mechanical treatment. The detoxified liquid is discharged into the sea.

In the 33^{rd} embodiment illustrated in FIG.33, the chlorine-containing substance injection unit 30 injects chlorine-containing substance in the seawater stored in the ballast water tank 5 for the chlorination, and the chlorinated liquid is fed to the mechanical treatment unit 3 for the mechanical treatment. The detoxified liquid is discharged into the sea.

In the 34^{th} embodiment illustrated in FIG.34, a residual chlorine meter 11 measures the level of residual chlorine, i.e. chloride concentration in the treated seawater after the seawater stored in the ballast water tank 5 is fed to the seawater electrolytic unit 4 for the chlorination. The electrolytic current of the seawater electrolytic unit 4 is controlled based on the measured residual chlorine level so as to control the amount of the sodium hypochlorite to be produced by the seawater electrolytic unit 4. Further the chlorinated seawater is fed to the mechanical treatment unit 3 for the mechanical treatment. The detoxified liquid is discharged into the sea.

In the 35^{th} embodiment illustrated in FIG.35, the seawater stored in the ballast water tank 5 circulates between the tank and the electrolytic unit 4 for the chlorination, thereby killing bacteria in the seawater. The chlorinated seawater is fed to the filter 20 for separating microbes by running the seawater through the filter 20, thereby removing comparatively large microbes. The detoxified seawater is discharged into the sea.

In the 36^{th} embodiment illustrated in FIG.3, seawater is fed to the filter 20 for separating microbes by running the seawater through the filter 20, thereby removing comparatively large microbes, and the filtered seawater is fed to the mechanical treatment unit 3 for the mechanical treatment. The detoxified seawater is discharged into the sea.

In the 37^{th} embodiment illustrated in FIG.37, the seawater stored in the ballast water tank 5 circulates between the tank and the electrolytic unit 4 for the chlorination, thereby killing bacteria in the seawater. The chlorinated seawater is fed to the mechanical treatment unit 3 for the mechanical treatment, and then to the metal-catalytic treatment unit 31 for metal-catalyzing, and further to the active-carbon treatment unit 32 for removing trihalomethane, thereby killing microbes in the seawater. The detoxified seawater is discharged into the sea.

In the 38^{th} embodiment illustrated in FIG.38, natural energy such as solar battery and wind power 33 is used as electric source of the seawater electrolytic unit 4 when the seawater stored in the ballast water tank 5 is fed to the seawater electrolytic unit 4 for the chlorination and then to the mechanical treatment unit 3 for the mechanical treatment, thereby killing microbes in the seawater. The seawater circulates via the ballast water tank for detoxifying.

In the 39^{th} embodiment illustrated in FIG.39, natural energy such as solar battery and wind power 33 is used as electric source of the seawater electrolytic unit 4 of the 27^{th} embodiment (FIG.27) for the chlorination the seawater stored in the ballast water tank.

In the 40^{th} embodiment illustrated in FIG.40, natural energy such as solar battery and wind power 33 is used as electric source of the seawater electrolytic unit 4 of the 32^{nd} embodiment (FIG.32) for the chlorination the seawater stored in the ballast water tank. In the 41^{st} embodiment illustrated in FIG.41, a part of the untreated seawater is fed to the seawater electrolytic unit 4 via a branching treatment line for the chlorination and returned to the treatment line. The part of the seawater circulates via the branching treatment line for the chlorination. The treated seawater is stored in the ballast water tank 5 via the treatment line.

In the 42^{nd} embodiment illustrated in FIG.42, the untreated seawater is fed to the seawater electrolytic unit 4 for the chlorination and stored in the ballast water tank 5.

In the 43^{rd} embodiment illustrated in FIG.43, the seawater stored in the ballast water tank 5 is fed to the seawater electrolytic unit 4 for the chlorination and stored in the ballast water tank 5. The seawater circulates between the unit 4 and the tank 5.

In the 44^{th} embodiment illustrated in FIG.44, part of the untreated seawater is fed to the seawater electrolytic unit 4 for the chlorination via the treatment line and outputted to a branching treatment line and discharged into the sea.

In the 45^{th} embodiment illustrated in FIG.45, the untreated seawater is fed to the seawater electrolytic unit 4 for the chlorination and the chlorinated seawater is discharged into the sea.

In the 46^{th} embodiment illustrated in FIG.46, a part of the untreated seawater circulates to the seawater electrolytic unit 4 for the chlorination via a branching treatment line and the seawater returned to the treatment line is further fed to the metal-catalytic treatment unit 31 for metal-catalyzing and then to the active-carbon treatment unit 32 for removing trihalomethane. The treated seawater is discharged into the sea

In the 47^{th} embodiment illustrated in FIG.47, the natural energy such as solar battery and wind power 33 is used as electric source of the seawater electrolytic unit 4 of the 43^{rd} embodiment (FIG.43).

FIG.48 and FIG.49 are the system diagrams showing main treatment steps of the afore-mentioned embodiments.

In FIG.48, untreated liquid generally means water which needs to be detoxified, including seawater. The diagrams (1) to (9) of FIG.48 show various combination of a mechanical shredding (mechanical treatment) for killing large microbes and chlorination by the seawater electrolytic unit 4 for killing bacteria in the liquid. In FIG.48, sodium hypochlorite is shown as NaClO.

In the diagram (1), in the same manner as the first embodiment illustrated in FIG.1 the combination of the chlorination and mechanical treatment is applied to untreated liquid, thereby obtaining a multiplier effect from both of the treatments. In the diagram (2), untreated liquid is chlorinated and then mechanical-shredded.

In the diagram (3), in reverse order from the diagram (2) untreated liquid is mechanical-shredded and then chlorinated. In the diagram (4), untreated liquid is chlorinated by injecting Cl₂ (chlorine) or sodium hypochlorite and then mechanical-shredded. In the diagram (5), in reverse order from the diagram (4), untreated seawater is mechanical-shredded and then chlorinated by injecting Cl₂(chlorine) or sodium hypochlorite.

In the diagram (6), untreated liquid is chlorinated by injecting sodium hypochlorite produced by the seawater electrolytic unit 4 using an electrolytic unit circulation system as with the 4^{th} embodiment and the chlorinated liquid is then mechanical-shredded.

In the diagram (7), in reverse order from the diagram (6) untreated liquid is mechanical-shredded and then chlorinated by injecting the sodium hypochlorite produced by the seawater electrolytic unit 4 as with the 4^{th} embodiment. In the diagram (8), untreated liquid is fed to the seawater electrolytic unit 4 for producing sodium hypochlorite and then mechanical-shredded.

In the diagram (9), in reverse order from the diagram (8) untreated liquid is mechanical-shredded and then fed to the seawater electrolytic unit 4 for producing sodium hypochlorite.

In the diagram (10), the combination of chlorination and mechanical-shredding is applied to untreated liquid and the liquid is treated with active carbons for removing trihalomethane. In the diagram (11), the aforesaid combination of chlorination and mechanical shredding is applied to untreated liquid and then the liquid is metal-catalyzed.

In the diagram (12), the aforesaid combination of chlorination and mechanical-shredding is applied to untreated liquid and in the following order the liquid is treated with active carbons for removing trihalomethane and metal-catalyzed.

Next, in the diagram(1) of FIG.49 the aforesaid combination of chlorination and mechanical-shredding(including post-shredding treatment) is applied to the seawater and the treated seawater is stored in the ballast water tank.

In the diagram (2) of FIG.49, the aforesaid combination of chlorination and mechanical-shredding (including post-shredding treatment) is applied to the seawater stored in the ballast water tank and the treated seawater is discharged into the sea.

In the diagram (3) of FIG.49, the aforesaid combination of chlorination and mechanical-shredding (including post-shredding treatment) is applied to the seawater stored in the ballast water tank and the treated seawater returns? circulates to the ballast water tank.

In the diagram (4) of FIG.49, natural energy such as solar battery and a wind power is used as an electric source for the chlorination.

We have described above the embodiments of the methods for detoxifying seawater and apparatuses thereof. However, the present invention can be widely applied to similar methods and apparatuses for detoxifying liquid containing microbes.

FIG.50 is a block diagram showing an apparatus for detoxifying the ballast water illustrating the 48^{th} preferred embodiment. In the 48^{th} embodiment illustrated in FIG.50, number 100 is a ship sailing at the sea 102 with a ballast water tank 5 mounted inside and number 50 is a on-land detoxification facility.

The on-land detoxification facility 50 comprises a seawater electrolytic unit 4 as the chlorination means and a mechanical treatment unit 3 as mechanical treatment means.

The mechanical treatment unit 3 is preferably a perforated-plate treatment unit, in which is provided a plate with a number of small openings facing the flow of seawater and microbes in the seawater are damaged by a turbulent flow of the seawater caused when the seawater passes through the perforated plate, thereby killing microbes present in the seawater. The mechanical treatment unit should not be limited to a perforated-plate treatment unit as long as a unit functions to damage microbes in seawater to kill microbes.

The seawater electrolytic unit 4 electrolyzes the seawater which has been mechanical-treated, for producing sodium hypochlorite by decomposing the seawater by an electric current. The sodium hypochlorite produced by the seawater electrolytic unit 4 is injected into a treatment line (not shown in drawings). The detailed structure will be explained hereinafter.

A seawater intake line 200 connects the sea and a inlet of the on-land detoxification facility (an inlet of either the seawater electrolytic unit 4 or the mechanical treatment unit 3), and a seawater discharge line 210 connects an outlet of the on-land detoxification facility (an outlet of either the seawater electrolytic unit 4 or the mechanical treatment unit 3) and to the ballast water tank 5.

In the 48^{th} embodiment, we will explain the detoxification in the case that untreated liquid is introduced through the seawater intake line and fed to the on-land detoxification facility 5 in the order of the mechanical treatment unit 3 to the electrolytic unit 4. However, the seawater detoxification can also be done in reverse order, i.e. intake line• electrolytic unit 4• mechanical treatment unit 3.

In the 48^{th} embodiment, untreated liquid introduced via the intake line 200 is fed to the mechanical treatment unit 3.

The mechanical treatment unit 3 damages microbes in the seawater passing through the perforated plate, thereby killing microbes. The seawater treated mechanically by the mechanical treatment unit 3 is fed to the seawater electrolytic unit 4 whose detailed construction is explained in FIG.4. The seawater electrolytic unit 4 electrolyzes the seawater to produce sodium hypochlorite and inject the sodium hypochlorite to the seawater.

By the chlorination means of the seawater electrolytic unit, the sodium hypochlorite contained in the seawater circulating between the circulation line 47 and the electrolytic bath 41, is injected into the electrolytic bath 41, thereby lowering the pH level of the seawater being supplied to the bath 41 and preventing scale adhesion.

The detoxified seawater by the electrolytic unit 4 and mechanical treatment unit 3 is stored in the ballast water tank 5 inside the ship via the seawater discharge line 210.

In this embodiment, the microbes are mainly those that are toxic or pathogenic or those that disturb ecosystems, such as zooplankton and its cyst, phytoplankton and its cyst, bacteria, fungi and virus.

The sodium hypochlorite in the above embodiment is most suitable as aforesaid chlorine-containing substance. However, chlorine, sodium, chloric acid, ion thereof or sodium chloride can be used.

The substance possessing oxidizing properties also include oxidants such as hydrogen peroxide and ozone, besides the chlorine-containing substance.

Meanwhile, the chlorine-containing substance can be added externally as chemicals.

Also, in the 48^{th} embodiment, the on-land detoxification facility 50 may comprise additionally a microbe mounting unit 020 (shown with a broken line in FIG. 50) mainly consisting of filter 20, backwash line 21, open-close valve 22 for controlling the opening of the backwash line 21 as shown in FIG.59, thereby removing large microbes present in the seawater when the seawater passing through the filter 20. In place of the filter 20, a centrifugal separator may be used.

It is also preferable to combine the seawater electrolytic unit 4 and the microbe mounting unit 020.

In the embodiment, the extinction of microbes of unlimited size can be securely achieved by applying the mechanical treatment for killing comparatively large microbes in the turbulent flow caused when the seawater passes through the perforated plate, combined with the chlorination for killing bacteria and the like by adding the sodium hypochlorite produced by the seawater electrolytic unit 4. Thus a pressure drop of the mechanical treatment unit is abated and its pressure is reduced.

In the embodiment, the extinction of microbes of unlimited size can be securely achieved by applying the mechanical treatment for killing comparatively large microbes in the turbulent flow caused when the seawater passes through the perforated plate, combined with the chlorination for killing bacteria and the like by injecting the sodium hypochlorite produced by the seawater electrolytic unit 4.

Further by adding the microbe mounting unit 020 (shown with a broken line in FIG. 50) mainly consisting of filter 20, backwash line 21, open-close valve 22 to control the opening of the backwash line 21, a pressure drop of the mechanical treatment unit 3 is abated and its pressure is reduced.

With this structure, a less power is needed to operate the mechanical treatment unit 3 for purifying the seawater, thereby downsizing the unit with the smaller capacity. Moreover, the input of the sodium hypochlorite is reduced in the chlorination for killing bacteria to which chlorination is very effective.

Also, with the combination of the chlorination for killing bacteria by injecting the sodium hypochlorite produced by the seawater electrolytic unit 4 in the seawater, and the mechanical treatment by the mechanical treatment unit 3 for killing comparatively large microbes, the sodium hypochlorite is needed only for removing bacteria, thereby reducing the input of the sodium hypochlorite for purifying the seawater compared to the method in which sodium hypochlorite is used for removing both microbes and bacteria.

Accordingly, the residual sodium hypochlorite decreases drastically, preventing the corrosion of succedent units by the sodium hypochlorite during the detoxification, thereby improving the durability of the succedent units and suppressing marine contamination caused when discharging the sodium hypochlorite to sea.

In the 49^{th} embodiment illustrated in FIG.51, the on-land detoxification facility is constituted by the seawater electrolytic unit 4 for chlorinating the seawater by injecting the sodium hypochlorite produced from the seawater, thereby killing microbes in the seawater. The mechanical treatment unit 3 for killing microbes is mounted in the ship 100.

According to the 49^{th} embodiment, untreated seawater is chlorinated by the seawater electrolytic unit 4 constituting the on-land detoxification facility 50, and the chlorinated seawater is fed to the mechanical treatment unit 3 provided inside the ship 100 for the mechanical treatment via the seawater discharge line 210 which connects the on-land detoxification facility and the ballast water tank inside the ship and then stored in the ballast water tank 5.

The rest of the structure and effect is the same as the 48^{th} embodiment (FIG.50) and bear the same reference numerals.

In the 50^{th} embodiment illustrated in FIG.52, in addition to the structure of the 49^{th} embodiment illustrated in FIG.51, a ship-side seawater intake line 290 is provided on the body of the ship 100, having an inlet open to the sea and connected to the mechanical treatment unit 3.

In the 50^{th} embodiment, the mechanical treatment unit 3 mounted in the ship 100 treats the seawater chlorinated by electrolytic unit 4 and also the seawater fed from the opening via the ship-side intake line 290 simultaneously and stores the detoxified seawater in the ballast water tank 5, thereby detoxifying large amount of seawater by the mechanical treatment unit of a simple structure.

The rest of the structure and effect is the same as the 49^{th} embodiment (FIG.51) and bear the same reference numerals.

According to the 48^{th} to 50^{th} embodiments, untreated seawater is detoxified by the on-land detoxification facility for killing microbes in the seawater, which is constituted by the seawater electrolytic unit 4 or the mechanical treatment unit 3. The treated seawater is stored in the ballast water tank 5 via the seawater discharge line 210 connecting the on-land detoxification facility 50, to the ballast water tank 5 in the ship 100, thereby omitting the on-board installation of at least one of detoxification units such as electrolytic unit or mechanical treatment unit. Therefore, the installation space on the ship for the detoxification apparatus is reduced, thereby increasing the loading space for cargo, etc.

Also, as the seawater discharge line 210 connecting the on-land detoxification facility constituted by the electrolytic unit 4, the mechanical treatment unit 3 or the like, can be disconnected and connected to every ship 100, one (one set of) on-land detoxification facility 50 can be used for the liquid detoxification of the ships 100, thereby raising the operation rate of the on-land detoxification facility, reducing the number of units mounted on each ship 100 for detoxification and thus lowering installation cost.

Further, in case that the detoxification apparatus constituted by the electrolytic unit 4 or the mechanical treatment unit 3, etc is located on-land, it is not necessary to install a new detoxification apparatus on existing ships 100 and the hull rework cost is minimized, thereby minimizing the cost for installing the detoxification apparatus on the ship.

It is also possible in the 49^{th} to 50^{th} embodiments to install the microbe mounting unit 020 shown in FIG. 50 with a broken line on the ship along with the mechanical treatment.

Also, in the 49^{th} to 50^{th} embodiments, the seawater electrolytic unit 4, mechanical treatment unit 3, microbe mounting unit 020 may be mounted on the land as the on-land detoxification facility or on the ship 100.

In FIG. 51 the electrolytic unit 4 maybe installed on the ship 100, and both or one of the mechanical treatment unit 3 and microbe mounting unit 020 may be installed on the land as the on-land detoxification facility 50.

In the 51^{st} to 53^{rd} embodiments illustrated in FIGS. 53-55, the on-land detoxification facility is mounted on a vehicle 220 so as to move freely on the land.

In the 51^{st} embodiment illustrated in FIG.53, the on-land detoxification facility of the 48^{th} embodiment is mounted on the vehicle 220 so as to move on the land 101 freely.

In the 52^{nd} embodiment illustrated in FIG.54, the on-land detoxification facility of the 49^{th} embodiment is mounted on the vehicle 220 so as to move on the land 101 freely.

In the 53^{rd} embodiment illustrated in FIG.55, the on-land detoxification facility of the 50^{th} embodiment is mounted on the vehicle 220 so as to move on the land 101 freely.

According to the 51^{st} to 53^{rd} embodiments, as the on-land detoxification facility 50 mounted on the vehicle 20 is moved close to the ship 100 freely and the seawater detoxified by the on-land detoxification facility 50 can be stored in the ballast water tank in the ship 100, the length of seawater feeding lines such as the seawater discharge line 210 can be minimized, thereby reducing the power for operating a feeding pump (not shown) and reducing the operating cost for detoxifying the seawater.

Also, according to the 51^{st} to 53^{rd} embodiments, when storing the detoxified seawater in the ballast water tank of the ships 100, the on-land detoxification facility 50 mounted on the vehicle 220 can be moved freely to each of the ships 100, thereby achieving the fast and efficient detoxification of ballast water.

The rest of the structure and effect is the same as the 48 to 50^{th} embodiments and bear the same reference numerals.

In the 54^{th} embodiment illustrated in FIG.56, number 100 is a ship sailing in the sea 102 with a ballast water tank 5 mounted inside, and number 230 is a facility mounting boat provided afloat and movable on the sea 102 with a at-sea detoxification facility 60 mounted thereon. The at-sea detoxification facility is constituted by the seawater electrolytic unit 4 and mechanical treatment unit 3 of the same structure as the 48^{th} to 53^{rd} embodiments.

A seawater intake line 250 feed seawater from the sea to the at-sea detoxification facility 60, and a seawater discharge line 240 connects the at-sea detoxification facility 60 and the ballast water tank 5 inside the ship 100, feeding to the ballast water tank 5 the seawater detoxified by the at-sea detoxification facility 60.

In the 54^{th} embodiment, untreated seawater is introduced through the seawater intake line 250 and fed to the at-sea detoxification facility 60 in the order of the mechanical treatment unit 3 to the electrolytic unit 4. However, the seawater detoxification can also be done in reverse order, i.e. electrolytic unit 4• mechanical treatment unit 3.

In the 54^{th} embodiment, untreated seawater is fed through the seawater intake line 250 to the mechanical treatment unit 3 for the mechanical treatment as with the 48^{th} to 53^{rd} embodiments and then to the seawater electrolytic unit 4 for the chlorination. The seawater detoxified by the electrolytic unit 4 and mechanical treatment unit 3 is stored through the seawater discharge line 240 in the ballast water tank 5 in the ship 100. 101 refers to on the land.

According to the 54^{th} embodiment, the seawater electrolytic unit 4 and mechanical treatment unit 3 constituting an at-sea detoxification facility 60 are mounted on a facility mounting boat 230 provided movable and afloat on the sea 102. The untreated seawater is fed to the at-sea detoxification facility 60 for killing microbes and then to the ballast water tank 5 via the seawater discharge line 240 connecting the at-sea detoxification facility 60 and the tank 5 inside the ship 100. Therefore, the electrolytic unit 4 and mechanical treatment unit 3, etc. can be located on the sea as the at-sea facility 60 and it is no longer necessary to install the units inside the ship 100, thereby reducing the space for installing detoxification apparatus and increasing the space for loading cargo, etc in the ship.

Also, as the seawater discharge line 240 connecting the electrolytic unit 4 and mechanical treatment unit 3 which constitute the at-sea detoxification facility 60 provided on the boat 230, can be disconnected and connected to every ship 100. A single set of at-sea detoxification facility 60 can be used for a plurality of ships 100 for liquid detoxification of the ships 100. By this, the operation rate of the at-sea detoxification facility can be raised and the number of units mounted on each ship 100 for detoxification can be reduced, resulted in reduced installation cost.

Further, when carrying out detoxification of the seawater for a ship 100 anchoring off shore, the facility mounting boat 23 mounted with the at-sea detoxification facility 60 is moved near to the ship 100, and seawater detoxified by the at-sea detoxification facility 60 is fed to the ballast water tank 5 of the ship, thereby achieving the fast and efficient detoxification of ballast water for any ship anchoring off shore.

Furthermore, as detoxification units such as the seawater electrolytic unit 4 and mechanical treatment unit mounted on the boat 230 afloat at sea can be set as at-sea detoxification facility, there is no need to provide detoxification units separately on the ship 100, thereby minimizing the hull rework cost of an existing ship 100 and minimizing the cost for installing the detoxification apparatus on the ship.

Also, in the 54^{th} embodiment the at-sea detoxification facility may comprise the electrolytic unit 4 and one or both of the mechanical treatment unit 3 and microbe separation unit 020 for removing microbes (shown in FIG.56 with a broken line).

As a modified example of the 54^{th} embodiment, it is also possible to install the electrolytic unit 4 on the mounting boat as the at-sea detoxification facility 60 and the mechanical treatment unit 3 and the microbe separation means 020 on the ship 100.

As another modified example of the 54^{th} embodiment, it is possible to install any combination of the electrolytic unit 4, the mechanical treatment unit 3 and the microbe separation means 020 on the sea as the at-sea detoxification facility 60 or on the ship 100.

In other words, the electrolytic unit 4 may be installed on the ship 100, and one or both of the mechanical treatment unit 3 and microbe separation means 020 may be installed on the boat as the at-sea detoxification facility 60.

In the 55^{th} embodiment illustrated in FIG.57, the at-sea detoxification facility comprises the mechanical treatment unit 3 and electrolytic unit 4 as is in the 54^{th} embodiment, and a second mechanical treatment unit 3 is provided on the ship 100.

In the 55^{th} embodiment, the seawater treated by the electrolytic unit 4 and mechanical treatment unit 3 of the at-sea detoxification facility is fed to another mechanical treatment unit 3 inside the ship 100 via the seawater discharge line 240. The seawater treated by the second mechanical treatment unit 3 is stored in the ballast water tank 5.

Structure and effect are the same as those of the 54^{th} embodiment (FIG.51) . The parts same as those of the 54^{th} embodiment bear the same reference numerals.

In the 56^{th} embodiment illustrated in FIG.58, in addition to the structure of 55^{th} embodiment (FIG.57), the ship 100 has a ship-side seawater intake line 290 on the body, having an inlet open to the sea and connected to the second mechanical treatment unit 3.

According to the 56^{th} embodiment, the another mechanical treatment unit 3 simultaneously detoxifies the seawater previously treated by the electrolytic unit 4 and mechanical treatment unit 3 of and the seawater fed from the ship-side intake line 290, and the detoxified seawater is stored in the ballast water tank 5, thereby detoxifying large amount of seawater with the mechanical treatment unit of simple structure.

Structure and effect are the same as that of the 55^{th} embodiment (FIG.57) and the same parts bear the same reference numerals. Other effects of the 56^{th} embodiment are the same as those of 54^{th} embodiment.

In the aforesaid embodiments, the seawater electrolytic unit 4 using an electrolytic unit circulation system as shown in FIG.4 is used as the chlorination means. However, it can be any unit having an chlorination function for killing microbes in the seawater by injecting the sodium hypochlorite produced from the seawater.

For an example, the seawater can be oxidized by an oxidizing means (not shown) by adding oxidizing substance to the seawater. The substance possessing oxidizing properties also include oxidants such as hydrogen peroxide and ozone, besides the chlorine-containing substance.

### INDUSTRIAL APPLICABILIT

As has been described in the foregoing, according to the present invention, the liquid detoxification method and apparatus can be provided for securely killing microbes of unlimited size without any strength drop on the side of treated liquid accommodation body and reducing the installation and operation costs. Further, the space for installing the detoxification apparatus for ballast water in ships can be reduced, thereby increasing loading space for cargo, etc. Still further, on existing ships, the hull rework cost for installation of detoxification apparatus can be minimized.

## Claims

1. A liquid detoxification method for purifying liquid by removing microbes in untreated liquid, said method comprising steps for:
applying a mechanical treatment to said liquid for damaging microbes therein to thereby kill microbes,
applying either one of chlorination or oxidization, said chlorination being performed by producing chlorine-containing substance from said liquid and injecting the substance into said liquid to thereby kill microbes, and said oxidization being performed by adding oxidizing substance to said liquid; and
storing treated liquid into a tank for treated liquid.

2. The liquid detoxification method according to claim 1,
wherein said chlorination is performed in a electrolytic circulation system in which all or part of said liquid is introduced into a storing tank and circulated through a circulation line between said storing tank and an electrolyzer for electrolyzing said liquid thereby to obtain chlorine-containing substance.

3. The liquid detoxification method according to claim 1, further comprising a step for:
applying at least one of an active-carbon treatment using active carbons and a metal-catalytic treatment to said liquid after said mechanical treatment and chlorination.

4. A liquid detoxification method for purifying liquid by removing microbes in untreated liquid, said method comprising steps for:
applying a microbe-separation treatment by filtration or centrifugal separation for removing comparatively large microbes present in said liquid, said filtration being performed by running said liquid through a filter or the like;
applying either one of chlorination or oxidization, said chlorination being performed by producing chlorine-containing substance from said liquid and feeding said chlorine-containing substance into said liquid to thereby kill microbes, and said oxidization being performed by adding oxidizing substance to said liquid; and
storing treated liquid into a tank for treated liquid.

5. The liquid detoxification method according to claim 4, further comprising a step for
applying a mechanical-treatment to said liquid for damaging microbes therein thereby to kill microbes before or after said step for applying a microbe-separation treatment.

6. A detoxification method for purifying seawater by removing microbes in untreated seawater, said method comprising steps for:
applying a mechanical treatment to said seawater for damaging microbes therein to thereby kill microbes,
applying either one of chlorination or oxidization, said chlorination being performed by producing chlorine-containing substance from said seawater and injecting said substance into said seawater to thereby kill microbes, and said oxidization being performed by adding oxidizing substance to said seawater; and
storing treated seawater into a tank for treated seawater.

7. The detoxification method according to claim 6,
wherein said chlorination is performed in an electrolytic circulation system in which all or part of seawater is introduced into a storing tank and circulated through a circulation line between said storing tank and an electrolyzer for electrolyzing said seawater thereby to obtain chlorine-containing substance.

8. The detoxification method according to claim 6,
wherein natural energy such as solar battery and a wind power is used as an electric source for said chlorination.

9. The detoxification method according to claim 6, 1, further comprising a step for
applying at least one of an active-carbon treatment using active carbons and a metal-catalytic treatment to seawater after said mechanical treatment and chlorination.

10. A detoxification method for purifying untreated seawater by removing microbes in untreated seawater, said method comprising steps for:
applying a microbe-separation treatment by filtration or centrifugal separation for removing comparatively large microbes present in said seawater, said filtration being performed by running said seawater through a filter or the like;
applying either one of chlorination or oxidization, said chlorination being performed by producing chlorine-containing substance from said seawater and adding the substance into said seawater to thereby kill microbes, and said oxidization being performed by adding oxidizing substance to said seawater; and
storing treated seawater into a ballast water tank.

11. The detoxification method according to claim 6, 1, further comprising a step for
applying a mechanical-treatment to said seawater for damaging microbes in said seawater thereby to kill microbes before or after said step for applying a microbe-separation treatment.

12. A detoxification apparatus for purifying liquid by removing microbes in untreated liquid containing untreated seawater, said apparatus comprising:
a mechanical treatment unit for applying a mechanical treatment to said liquid by damaging microbes in said liquid to thereby kill microbes,
either one of oxidization means or chlorination means, said oxidization means adding oxidizing substance to said liquid and said chlorination means feeding chlorine-containing substance formed from said liquid to said liquid thereby to kill microbes; and
a tank for treated liquid for storing said treated liquid after being treated in said mechanical treatment unit and said oxidization means or chlorination means.

13. The detoxification apparatus for purifying liquid according to claim 12,
wherein said chlorination means has a liquid electrolytic unit being configured to apply chlorination being performed in an electrolytic circulation system in which all or part of said liquid is introduced into a storing tank and circulated through a circulation line between said storing tank and an electrolyzer for electrolyzing said liquid thereby to obtain chlorine-containing substance.

14. The detoxification apparatus for purifying liquid according to claim 12, further comprising:
a residual-chlorine meter for measuring the level of residual chlorine in treated seawater to which said chlorination was applied;
wherein said chlorination means control the amount of the chlorine-containing substance to be produced based on the residual chlorine level measured by said residual-chlorine meter.

15. A detoxification apparatus for purifying liquid by removing microbes in untreated liquid containing untreated seawater, said apparatus comprising:
a microbe-separation unit by filtration or centrifugal separation for removing comparatively large microbes present in said liquid, said filtration being performed by running said liquid through a filter or the like;
either one of chlorination means or oxidization means, said chlorination means producing chlorine-containing substance from said liquid and feeding said substance into said liquid to thereby kill microbes, and said oxidization means adding oxidizing substance to said liquid; and
a tank for storing treated liquid.

16. The detoxification apparatus for purifying liquid according to claim 15, further comprising:
a mechanical treatment unit for applying a mechanical treatment to said liquid to damage and kill microbes present in said liquid before or after said microbe-separation unit.

17. A detoxification method for purifying seawater by removing microbes in seawater stored in a ballast water tank, said method comprising steps for:
applying a mechanical treatment to said seawater for damaging microbes therein to thereby kill microbes,
applying either one of chlorination or oxidization, said chlorination being performed by producing chlorine-containing substance from said seawater and feeding said substance into said seawater to thereby kill microbes, and said oxidization being performed by adding oxidizing substance to said liquid; and
discharging treated seawater out of said ballast water tank.

18. A detoxification method for purifying seawater by removing microbes in seawater stored in a ballast water tank, said method comprising steps for:
applying a mechanical treatment to said seawater for damaging microbes therein to thereby kill microbes,
applying either one of chlorination or oxidization, said chlorination being performed by producing chlorine-containing substance from said seawater and feeding said substance into said seawater to thereby kill microbes, and said oxidization being performed by adding oxidizing substance to said liquid; and
circulating said seawater to said ballast water tank.

19. The detoxification method according to claim 17 or 18,
wherein natural energy such as solar battery and a wind power is used as an electric source for said chlorination.

20. The detoxification method according to claim 17 or 18,
wherein said chlorination is performed in an electrolytic circulation system in which all or part of said seawater stored in said ballast water tank is introduced into a storing tank and circulated through a circulation line between said storing tank and an electrolyzer for electrolyzing said seawater thereby to obtain chlorine-containing substance.

21. The detoxification method according to claim 17 or 18, further comprising a step for:
applying at least one of an active-carbon treatment using active carbons and a metal-catalytic treatment to said seawater after said mechanical treatment and chlorination.

22. A detoxification method for purifying seawater by removing microbes in seawater stored in a ballast water tank, said method comprising steps for:
applying a microbe-separation treatment by filtration or centrifugal separation for removing comparatively large microbes present in said seawater, said filtration being performed by running said seawater through a filter or the like;
applying either one of chlorination or oxidization, said chlorination being performed by producing chlorine-containing substance from said seawater and feeding said chlorine-containing substance into said seawater to thereby kill microbes, and said oxidization being performed by adding oxidizing substance to said seawater; and
discharging treated seawater out of said ballast water tank.

23. A detoxification method for purifying seawater by removing microbes in seawater stored in a ballast water tank, said method comprising steps for:
applying a microbe-separation treatment by filtration or centrifugal separation for removing comparatively large microbes present in said seawater, said filtration being performed by running said seawater through a filter or the like;
applying either one of chlorination or oxidization, said chlorination being performed by producing chlorine-containing substance from said seawater and feeding said chlorine-containing substance into said seawater to thereby kill microbes, and said oxidization being performed by adding oxidizing substance to said seawater; and
circulating said seawater to said ballast water tank.

24. The detoxification method for purifying seawater according to claim 22 or 23, further comprising a step for
applying a mechanical-treatment to said seawater for damaging microbes in said seawater thereby to kill microbes before or after said step for applying microbe-separation treatment.

25. The detoxification method for purifying seawater according to claim 22 or 23,
wherein said chlorination is performed in an electrolytic circulation system in which all or part of said seawater stored in said ballast water tank is introduced into a storing tank and circulated through a circulation line between said tank and an electrolyzer for electrolyzing said seawater thereby to obtain chlorine-containing substance, and said microbe separation treatment is performed to said seawater chlorinated in said electrolytic circulation system.

26. The detoxification method for purifying seawater according to claim 22 or 23,
wherein said chlorine-containing substance is composed by chlorine, sodium hypochlorite, sodium chlorite, chloric acid, or their ions or sodium chloride.

27. A detoxification apparatus for purifying seawater stored in a ballast water tank by removing microbes in seawater, said apparatus comprising:
a mechanical treatment unit for applying a mechanical treatment to said seawater by damaging microbes therein to thereby kill microbes; and
either one of chlorination means or oxidization means, said chlorination means feeding chlorine-containing substance formed from said seawater to said seawater thereby to kill microbes and said oxidization means adding oxidizing substance to said seawater; and
wherein said seawater previously treated in said mechanical treatment unit and chlorination means or oxidization means is discharged out of said ballast water tank.

28. A detoxification apparatus for purifying seawater stored in a ballast water tank by removing microbes in seawater, said apparatus comprising:
a mechanical treatment unit for applying a mechanical treatment to said seawater by damaging microbes therein to thereby kill microbes; and
either one of chlorination means or oxidization means, said chlorination means feeding chlorine-containing substance formed from said seawater to said seawater thereby to kill microbes and said oxidization means adding oxidizing substance to said seawater; and
wherein said seawater previously treated in said mechanical treatment unit and chlorination means or oxidization means is circulated to said ballast water tank.

29. The detoxification apparatus for purifying seawater according to claim 27 or 28,
wherein said chlorination means has a liquid electrolytic unit being configured to apply chlorination being performed in an electrolytic circulation system in which all or part of said seawater is introduced into a storing tank and circulated through a circulation line between said storing tank and an electrolyzer for electrolyzing said seawater thereby to obtain chlorine-containing substance.

30. The detoxification apparatus for purifying seawater according to claim 29,
wherein said liquid electrolytic unit is provided in downstream or upstream of said mechanical treatment unit.

31. The detoxification apparatus for purifying seawater according to claim 29,
wherein said liquid electrolytic unit is provided on said circulation line and composed to perform said chlorination in said electrolytic circulation system.

32. The detoxification apparatus for purifying seawater according to claim 29, further comprising:
a residual-chlorine meter for measuring the level of residual chlorine in seawater stored in said ballast water tank;
wherein said chlorination means control the amount of the chlorine-containing substance to be produced by said electrolytic circulation system based on the residual chlorine level measured by said residual-chlorine meter.

33. A detoxification apparatus for purifying seawater stored in a ballast water tank by removing microbes in seawater, said apparatus comprising:
a microbe-separation unit by filtration or centrifugal separation for removing comparatively large microbes present in said seawater, said filtration being performed by running said seawater through a filter or the like;
either one of chlorination means or oxidization means, said chlorination means producing chlorine-containing substance from said seawater and feeding said substance into said seawater to thereby kill microbes, and said oxidization means adding oxidizing substance to said seawater; and
wherein said seawater previously treated in said microbe-separation unit and chlorination means or oxidization means is discharged out of said ballast water tank.

34. A detoxification apparatus for purifying seawater stored in a ballast water tank by removing microbes in seawater, said apparatus comprising:
a microbe-separation unit by filtration or centrifugal separation for removing comparatively large microbes present in said seawater, said filtration being performed by running said seawater through a filter or the like;
either one of chlorination means or oxidization means, said chlorination means producing chlorine-containing substance from said seawater and feeding said substance into said seawater to thereby kill microbes, and said oxidization means adding oxidizing substance to said seawater; and
wherein said seawater previously treated in said microbe-separation unit and chlorination means or oxidization means is circulated to said ballast water tank.

35. The detoxification apparatus for purifying seawater according to claim 33 or 34, further comprising
a mechanical treatment unit for applying a mechanical treatment to said seawater to damage and kill microbes present therein in downstream or upstream of said microbe-separation unit.

36. A detoxification apparatus for purifying seawater by removing microbes present in seawater, comprising:
an on-land detoxification facility being placed on land for killing microbes in said seawater;
a ballast water tank being mounted on a ship;
a seawater intake line for taking in seawater into said on-land detoxification facility; and
a seawater discharge line for feeding said seawater treated in said on-land detoxification facility to said ballast water tank;
wherein a microbe-extinction treatment for killing microbes is applied to said seawater introduced into said on-land detoxification facility via said intake line, and said treated seawater is stored into said ballast water tank via said discharge line.

37. The detoxification apparatus for purifying seawater according to claim 36,
wherein said on-land detoxification facility comprises:
either one of chlorination means or oxidization means, said chlorination means producing chlorine-containing substance from said seawater and feeding said substance into said seawater to thereby kill microbes, and said oxidization means adding oxidizing substance to said seawater; and
a mechanical treatment unit for applying a mechanical treatment to said seawater by damaging microbes therein to thereby kill microbes, and
wherein said seawater treated in said chlorination means or oxidization means and said mechanical treatment unit is stored into said ballast water tank via said discharge line.

38. The detoxification apparatus for purifying seawater according to claim 36,
wherein said on-land detoxification facility comprises:
either one of chlorination means or oxidization means, said chlorination means producing chlorine-containing substance from said seawater and feeding said substance into said seawater to thereby kill microbes, and said oxidization means adding oxidizing substance to said seawater; and
a microbe-separation unit by filtration or centrifugal separation for removing comparatively large microbes present in said seawater, said filtration being performed by running said seawater through a filter or the like; and
wherein said seawater treated in said chlorination means or oxidization means and said microbe-separation unit is stored into said ballast water tank via said discharge line.

39. The detoxification apparatus for purifying seawater according to claim 36,
wherein said on-land detoxification facility is either one of chlorination means or oxidization means when an on-board detoxification facility mounted on said ship is a mechanical treatment unit, or said on-land detoxification is said mechanical treatment unit when said on-board detoxification facility is either one of chlorination means or oxidization means, said chlorination means producing chlorine-containing substance from said seawater and feeding said substance into said seawater to thereby kill microbes, said oxidization means adding oxidizing substance to said seawater, and said mechanical treatment unit applying a mechanical treatment to said seawater by damaging microbes therein to thereby kill microbes,
wherein said seawater treated in said on-land detoxification facility is fed to said on-board detoxification facility via said seawater discharge line, and said seawater treated in said on-board detoxification facility is stored in said ballast water tank.

40. The detoxification apparatus for purifying seawater according to claim 36,
wherein said on-land detoxification facility is either one of chlorination means or oxidization means when an on-board detoxification facility mounted on said ship is a microbe-separation unit, or said on-land detoxification is said microbe-separation unit when said on-board detoxification facility is either one of chlorination means or oxidization means, said chlorination means producing chlorine-containing substance from said seawater and feeding said substance into said seawater to thereby kill microbes, said oxidization means adding oxidizing substance to said seawater, and said microbe-separation unit removing comparatively large microbes present in said seawater by centrifugal separation or filtration which is performed by running said seawater through a filter or the like, and
wherein said seawater treated in said on-land detoxification facility is fed to said on-board detoxification facility via said seawater discharge line, and said seawater treated in said on-board detoxification facility is stored in said ballast water tank.

41. The detoxification apparatus for purifying seawater according to claim 40, further comprising
a seawater intake line provided on board which has an inlet opening to the sea and is connected to said mechanical treatment unit or microbe-separation unit,
wherein, when said on-land detoxification unit is either said chlorination means or oxidization means, said mechanical treatment unit or microbe-separation unit applies mechanical treatment or microbe separation to said seawater treated in said on-land detoxification unit and seawater introduced via said seawater intake line.

42. The detoxification apparatus for purifying seawater according to claim 36, further comprising
a carrier such as a vehicle for mounting said on-land detoxification facility thereon and moving freely on land.

43. A detoxification apparatus for purifying seawater by removing microbes present in seawater, comprising:
an at-sea detoxification facility being placed on the sea for killing microbes in said seawater;
a ballast water tank being mounted on a ship;
a seawater intake line for taking in seawater into said at-sea detoxification facility; and
a seawater discharge line for feeding said seawater treated in said at-sea detoxification facility to said ballast water tank;
wherein a microbe-extinction treatment for killing microbes is applied to said seawater introduced into said at-sea detoxification facility via said intake line, and said treated seawater is stored into said ballast water tank via said discharge line.

44. The detoxification apparatus for purifying seawater according to claim 43,
wherein said at-sea detoxification facility comprises:
either one of chlorination means or oxidization means, said chlorination means producing chlorine-containing substance from said seawater and feeding said substance into said seawater to thereby kill microbes, and said oxidization means adding oxidizing substance to said seawater; and
a mechanical treatment unit for applying a mechanical treatment to said seawater by damaging microbes therein to thereby kill microbes, and
wherein said seawater treated in said chlorination means or oxidization means and said mechanical treatment unit is stored into said ballast water tank via said discharge line.

45. The detoxification apparatus for purifying seawater according to claim 43,
wherein said at-sea detoxification facility comprises:
either one of chlorination means or oxidization means, said chlorination means producing chlorine-containing substance from said seawater and feeding said substance into said seawater to thereby kill microbes, and said oxidization means adding oxidizing substance to said seawater; and
a microbe-separation unit by filtration or centrifugal separation for removing comparatively large microbes present in said seawater, said filtration being performed by running said seawater through a filter or the like; and
wherein said seawater treated in said chlorination means or oxidization means and said microbe-separation unit is stored into said ballast water tank via said discharge line.

46. The detoxification apparatus for purifying seawater according to claim 43,
wherein said at-sea detoxification facility is either one of chlorination means or oxidization means when an on-board detoxification facility mounted on said ship is a mechanical treatment unit, or said at-sea detoxification is said mechanical treatment unit when said on-board detoxification facility is either one of chlorination means or oxidization means, said chlorination means producing chlorine-containing substance from said seawater and feeding said substance into said seawater to thereby kill microbes, said oxidization means adding oxidizing substance to said seawater, and said mechanical treatment unit applying a mechanical treatment to said seawater by damaging microbes therein to thereby kill microbes,
wherein said seawater treated in said at-sea detoxification facility is fed to said on-board detoxification facility via said seawater discharge line, and said seawater treated in said on-board detoxification facility is stored in said ballast water tank.

47. The detoxification apparatus for purifying seawater according to claim 43,
wherein said at-sea detoxification facility is either one of chlorination means or oxidization means when an on-board detoxification facility mounted on said ship is a microbe-separation unit, or said on-land detoxification is said microbe-separation unit when said on-board detoxification facility is either one of chlorination means or oxidization means, said chlorination means producing chlorine-containing substance from said seawater and feeding said substance into said seawater to thereby kill microbes, said oxidization means adding oxidizing substance to said seawater, and said microbe-separation unit removing comparatively large microbes present in said seawater by centrifugal separation or filtration which is performed by running said seawater through a filter or the like, and
wherein said seawater treated in said at-sea detoxification facility is fed to said on-board detoxification facility via said seawater discharge line, and said seawater treated in said on-board detoxification facility is stored in said ballast water tank.

48. The detoxification apparatus for purifying seawater according to claim 46, further comprising
a seawater intake line provided on board which has an opening to the sea and connected to said mechanical treatment unit,
wherein, when said at-sea detoxification unit is either said chlorination means or oxidization means, said mechanical treatment unit applies mechanical treatment to said seawater treated in said at-sea detoxification unit and seawater introduced via said seawater intake line.

49. The detoxification apparatus for purifying seawater according to claim 46, further comprising
a seawater intake line provided on board which has an opening to the sea and connected to said microbe-separation unit,
wherein, when said at-sea detoxification unit is either said chlorination means or oxidization means, said microbe-separation unit applies microbe separation treatment to said seawater treated in said at-sea detoxification unit and seawater introduced via said seawater intake line.

50. The detoxification apparatus for purifying seawater according to claim 37,
wherein said chlorination means has a liquid electrolytic unit being configured to apply chlorination being performed in an electrolytic circulation system in which all or part of said seawater is introduced into a storing tank and circulated through a circulation line between said storing tank and an electrolyzer for electrolyzing said seawater thereby to obtain chlorine-containing substance.
